(19) **Europäisches Patentamt / European Patent Office / Office européen des brevets**

(11) **EP 4 618 661 A1**

(12) **EUROPEAN PATENT APPLICATION**
published in accordance with Art. 153(4) EPC

(43) Date of publication:
**17.09.2025 Bulletin 2025/38**

(21) Application number: **23887704.7**

(22) Date of filing: **10.10.2023**

(51) International Patent Classification (IPC):
***H04W 72/044*** (2023.01)

(52) Cooperative Patent Classification (CPC):
**H04W 56/00; H04W 72/044; H04W 72/40**

(86) International application number:
**PCT/CN2023/123704**

(87) International publication number:
**WO 2024/099012 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 CN 202211406912**

(71) Applicant: **Huawei Technologies Co., Ltd.**
**Shenzhen, Guangdong 518129 (CN)**

(72) Inventors:
• **ZHANG, Yi**
  **Shenzhen, Guangdong 518129 (CN)**
• **XIANG, Zhengzheng**
  **Shenzhen, Guangdong 518129 (CN)**
• **SU, Hongjia**
  **Shenzhen, Guangdong 518129 (CN)**
• **LU, Lei**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD AND COMMUNICATION APPARATUS**

(57)    Embodiments of this application provide a communication method and a communication apparatus. The method includes: A first terminal device determines a beam sweeping sequence based on identification information of the first terminal device and a total quantity of beams corresponding to the first terminal device; the first terminal device determines a first pattern based on the beam sweeping sequence; and the first terminal device sends a first synchronization signal on the beam sweeping sequence based on the first pattern. In a distributed sidelink SL system, according to the method provided in this application, any two terminal devices receive and send beams based on respective beam sweeping sequences and first patterns determined by the terminal devices, so that initial beam synchronization or access can be implemented in a specific time period, beam information can be further exchanged, and a communication link can be established between terminal devices that have a communication requirement.

Method 400

A first terminal device determines a beam sweeping sequence based on identification information of the first terminal device and a total quantity of beams corresponding to the first terminal device    — S410

↓

The first terminal device determines a first pattern based on the beam sweeping sequence    — S420

FIG. 4

## Description

This application claims priority to Chinese Patent Application No. 202211406912.X, filed with the China National Intellectual Property Administration on November 10, 2022 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

A cellular vehicle to X (cellular vehicle to X, C-V2X) technology is a technology that provides an internet of vehicles service based on an existing cellular network infrastructure. C-V2X can not only implement communication between devices through relay of a cellular network to implement high-speed and wide-coverage transmission, but also can implement low-latency and high-reliability transmission through direct communication between devices. The C-V2X technology includes V2X based on a long term evolution (long term evolution, LTE) network (LTE-V2X) and V2X based on a new radio (new radio, NR) network (NR-V2X).

Currently, only a configuration manner of a resource pool used for sidelink transmission in each of LTE-V2X and NR-V2X is specified. However, with technology evolution, in a sidelink (sidelink, SL) system, beam management for an FR2 frequency band is performed by a network device on terminal devices through unified coordinated scheduling, to ensure that a peer relationship is maintained between the terminal devices in the SL system. Therefore, in a distributed SL system, a network device does not perform unified coordinated scheduling on terminal devices, and a mechanism in the conventional technology cannot be executed due to initial synchronization of an FR2-based directional beam. Therefore, how to support initial synchronization or access of an FR2 beam in a distributed SL system becomes an urgent problem to be resolved.

## SUMMARY

Embodiments of this application provide a communication method and a communication apparatus, to provide a solution for supporting beam matching of an FR2 frequency band in an SL system, and ensure, in the SL system, that synchronization or access between beams of any two terminal devices can be implemented in a first period, thereby further improving user experience.

According to a first aspect, a communication method is provided. A first terminal device determines a beam sweeping sequence based on identification information and a total quantity of beams, where the identification information is identification information of the first terminal device, and the total quantity of beams is a total quantity of beams corresponding to the first terminal device; the first terminal device determines a first pattern based on the beam sweeping sequence; and the first terminal device sends a first synchronization signal on the beam sweeping sequence based on the first pattern.

According to the communication method provided in this application, the first terminal device determines the beam sweeping sequence based on the identification information and the total quantity of beams of the first terminal device, and further determines the first pattern; and the first terminal device sends the first synchronization signal on the beam sweeping sequence based on the determined first pattern. This ensures that any two terminal devices can complete mutual beam information receiving and sending in a specific period, that is, complete initial beam synchronization or access.

With reference to the first aspect, in some possible implementations, that a first terminal device determines a beam sweeping sequence based on identification information of the first terminal device and a total quantity of beams corresponding to the first terminal device includes: The first terminal device determines a first sequence based on the identification information; and the first terminal device determines the beam sweeping sequence based on the first sequence and the total quantity of beams.

Based on the foregoing technical solution, the identification information of the first terminal device is pre-configured or preset, and the identification information is unique. The first sequence is determined based on the unique identification information, and the beam sweeping sequence is further determined based on the first sequence and the total quantity of beams of the first terminal device. This can ensure that the first terminal device can align a beam with a beam of another terminal device in a beam sweeping direction during beam sweeping, so that initial access or synchronization between the two terminal devices is subsequently completed within a beam alignment time.

With reference to the first aspect, in some possible implementations, that the first terminal device determines the first pattern based on the beam sweeping sequence includes: The first terminal device determines the first pattern based on a first sweeping time and a first preset condition, where the first sweeping time is a sweeping time of a beam in the beam sweeping sequence, the first sweeping time includes n time units, and n is a positive integer greater than or equal to 9.

With reference to the first aspect, in some possible implementations, the first pattern further indicates the first terminal device to send the first synchronization signal in an $i^{th}$ time unit and an $(n-i)^{th}$ time unit; and/or the first pattern further indicates the first terminal device to receive the first synchronization signal in a time unit other than the $i^{th}$ time unit and the $(n-i)^{th}$ time unit in the n time units, where i is an integer less than or equal to n, and both i and n-i are integers greater than or equal to 0.

With reference to the first aspect, in some possible implementations, the first preset condition is: (1) $i\_p>i\_q$; (2) $i\_p\leq 2i\_q$; (3) $n/2\geq i\_p+i\_q$; (4) $i\_p\leq n/3$, and $i\_q<n/4$; and (5) if $n\leq 2i\_p+i\_q$ and $n\geq i\_p+i\_q$, $n\leq i\_p+2i\_q$, where p and q are determined based on the total quantity of beams, i_p represents a time unit for sending the first synchronization signal by using a second pattern, i_q represents a time unit for sending the first synchronization signal by using a third pattern, the second pattern and the third pattern are related to the beam sweeping sequence, and the first pattern includes the second pattern and the third pattern.

With reference to the first aspect, in some possible implementations, the first terminal device receives a second synchronization signal, where the second synchronization signal is from a second terminal device; and the first terminal device determines identification information of the second terminal device based on a synchronization signal identifier of the second synchronization signal.

Based on the foregoing technical solution, after receiving the second synchronization signal, the first terminal device determines, based on the synchronization signal identifier of the second synchronization signal, that the second synchronization signal is from the second terminal device. The first terminal device identifies identification information of a sending device that the received second synchronization signal is from.

With reference to the first aspect, in some possible implementations, the first terminal device determines a second beam based on index information of the second synchronization signal, where the second beam is a beam used by the second terminal device to send the second synchronization signal.

Based on the foregoing technical solution, the first terminal device further determines, based on the index information of the second synchronization signal, the beam used by the second terminal device to send the second synchronization signal. The first terminal device identifies the beam used by the second terminal device to send the second synchronization signal; and the first terminal device measures a reference signal power of the second synchronization signal, and selects a beam to send the synchronization signal, to complete initial beam selection.

With reference to the first aspect, in some possible implementations, an indication resource of the index information includes a 3-bit resource carried by a demodulation reference signal DMRS of the second synchronization signal and a 1-bit resource in reserved bits reservedBits of a payload of the second synchronization signal.

According to a second aspect, a communication method is provided. The method includes: A second terminal device determines a beam sweeping sequence based on identification information of the second terminal device and a total quantity of beams corresponding to the second terminal device; the second terminal device determines a first pattern based on the beam sweeping sequence; and the second terminal device sends a first synchronization signal on the beam sweeping sequence based on the first pattern.

With reference to the second aspect, in some possible implementations, that a second terminal device determines a beam sweeping sequence based on identification information of the second terminal device and a total quantity of beams corresponding to the second terminal device includes: The second terminal device determines a first sequence based on the identification information; and the second terminal device determines the beam sweeping sequence based on the first sequence and the total quantity of beams.

With reference to the second aspect, in some possible implementations, that the second terminal device determines the first pattern based on the beam sweeping sequence includes: The second terminal device determines the first pattern based on a first sweeping time and a first preset condition, where the first sweeping time is a sweeping time of a beam in the beam sweeping sequence, the first sweeping time includes n time units, and n is a positive integer greater than or equal to 9.

With reference to the second aspect, in some possible implementations, the first pattern further indicates the second terminal device to send the first synchronization signal in an $i^{th}$ time unit and an $(n-i)^{th}$ time unit; and/or the first pattern further indicates the second terminal device to receive the first synchronization signal in a time unit other than the $i^{th}$ time unit and the $(n-i)^{th}$ time unit in the n time units, where i is an integer less than or equal to n, and both i and n-i are integers greater than or equal to 0.

With reference to the second aspect, in some possible implementations, the first preset condition is: (1) $i\_p>i\_q$; (2) $i\_p\leq 2i\_q$; (3) $n/2\geq i\_p+i\_q$; (4) $i\_p\leq n/3$, and $i\_q<n/4$; and (5) if $n\leq 2i\_p+i\_q$ and $n\geq i\_p+i\_q$, $n\leq i\_p+2i\_q$, where p and q are determined based on the total quantity of beams, i_p represents a time unit for sending the first synchronization signal by using a second pattern, i_q represents a time unit for sending the first synchronization signal by using a third pattern, the second pattern and the third pattern are related to the beam sweeping sequence, and the first pattern includes the second pattern and the third pattern.

With reference to the second aspect, in some possible implementations, the second terminal device sends a second synchronization signal to a first terminal device, where the second synchronization signal is used to determine the identification information of the second terminal device.

With reference to the second aspect, in some possible implementations, index information of the second synchronization signal is used to determine a second beam, and the second beam is a beam used by the second terminal device to send the second synchronization signal.

With reference to the second aspect, in some possible implementations, an indication resource of the index information includes a 3-bit resource carried by a demodulation reference signal DMRS of the second synchronization signal and a 1-bit resource in reserved bits reservedBits of a payload of the second synchronization signal.

According to a third aspect, a communication apparatus is provided. The apparatus includes: a processing unit, configured to determine a beam sweeping sequence based on identification information of the first terminal device and a total quantity of beams corresponding to the first terminal device, where the processing unit is further configured to determine a first pattern based on the beam sweeping sequence; and send a first synchronization signal on the beam sweeping sequence based on the first pattern.

With reference to the third aspect, in some possible implementations, the processing unit is further configured to determine a first sequence based on the identification information; and the processing unit is further configured to determine the beam sweeping sequence based on the first sequence and the total quantity of beams.

With reference to the third aspect, in some possible implementations, the processing unit is further configured to determine the first pattern based on a first sweeping time and a first preset condition, where the first sweeping time is a sweeping time of a beam in the beam sweeping sequence, the first sweeping time includes n time units, and n is a positive integer greater than or equal to 9.

With reference to the third aspect, in some possible implementations, the first pattern further indicates the first terminal device to send the first synchronization signal in an $i^{th}$ time unit and an $(n-i)^{th}$ time unit; and/or the first pattern further indicates the first terminal device to receive the first synchronization signal in a time unit other than the $i^{th}$ time unit and the $(n-i)^{th}$ time unit in the n time units, where i is an integer less than or equal to n, and both i and n-i are integers greater than or equal to 0.

With reference to the third aspect, in some possible implementations, the first preset condition is: (1) $i\_p>i\_q$; (2) $i\_p \le 2i\_q$; (3) $n/2 \ge i\_p+i\_q$; (4) $i\_p \le n/3$, and $i\_q<n/4$; and (5) if $n \le 2i\_p+i\_q$ and $n \ge i\_p+i\_q$, $n \le i\_p+2i\_q$, where p and q are determined based on the total quantity of beams, i_p represents a time unit for sending the first synchronization signal by using a second pattern, i_q represents a time unit for sending the first synchronization signal by using a third pattern, the second pattern and the third pattern are related to the beam sweeping sequence, and the first pattern includes the second pattern and the third pattern.

With reference to the third aspect, in some possible implementations, the transceiver unit is configured to receive a second synchronization signal, where the second synchronization signal is from a second terminal device; and the processing unit is configured to determine identification information of the second terminal device based on a synchronization signal identifier of the second synchronization signal.

With reference to the third aspect, in some possible implementations, the processing unit is configured to determine a second beam based on index information of the second synchronization signal, where the second beam is a beam used by the second terminal device to send the second synchronization signal.

With reference to the third aspect, in some possible implementations, an indication resource of the index information includes a 3-bit resource carried by a demodulation reference signal DMRS of the second synchronization signal and a 1-bit resource in reserved bits reservedBits of a payload of the second synchronization signal.

In an implementation, the apparatus is a communication device. When the apparatus is a communication device, the transceiver unit (or referred to as a communication unit) may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus includes: a processing unit, configured to determine a beam sweeping sequence based on identification information of the first terminal device and a total quantity of beams corresponding to the first terminal device, where the processing unit is further configured to determine a first pattern based on the beam sweeping sequence; and send a first synchronization signal on the beam sweeping sequence based on the first pattern.

With reference to the fourth aspect, in some possible implementations, the processing unit is further configured to determine a first sequence based on the identification information; and the processing unit is further configured to determine the beam sweeping sequence based on the first sequence and the total quantity of beams.

With reference to the fourth aspect, in some possible implementations, the processing unit is further configured to determine the first pattern based on a first sweeping time and a first preset condition, where the first sweeping time is a sweeping time of a beam in the beam sweeping sequence, the first sweeping time includes n time units, and n is a positive integer greater than or equal to 9.

With reference to the fourth aspect, in some possible implementations, the first pattern further indicates the first terminal device to send the first synchronization signal in an $i^{th}$ time unit and an $(n-i)^{th}$ time unit; and/or the first pattern further indicates the first terminal device to receive the first synchronization signal in a time unit other than the $i^{th}$ time unit and the $(n-i)^{th}$ time unit in the n time units, where i is an integer less than or equal to n, and both i and n-i are integers greater than or equal to 0.

With reference to the fourth aspect, in some possible implementations, the first preset condition is: (1) $i\_p>i\_q$; (2) $i\_p\leq 2i\_q$; (3) $n/2\geq i\_p+i\_q$; (4) $i\_p\leq n/3$, and $i\_q<n/4$; and (5) if $n\leq 2i\_p+i\_q$ and $n\geq i\_p+i\_q$, $n\leq i\_p+2i\_q$, where p and q are determined based on the total quantity of beams, $i\_p$ represents a time unit for sending the first synchronization signal by using a second pattern, $i\_q$ represents a time unit for sending the first synchronization signal by using a third pattern, the second pattern and the third pattern are related to the beam sweeping sequence, and the first pattern includes the second pattern and the third pattern.

With reference to the fourth aspect, in some possible implementations, the transceiver unit is configured to send a second synchronization signal to the first terminal device, where the second synchronization signal is used to determine identification information of the second terminal device.

With reference to the fourth aspect, in some possible implementations, index information of the second synchronization signal is used to determine a second beam, and the second beam is a beam used by the second terminal device to send the second synchronization signal.

With reference to the fourth aspect, in some possible implementations, an indication resource of the index information includes a 3-bit resource carried by a demodulation reference signal DMRS of the second synchronization signal and a 1-bit resource in reserved bits reservedBits of a payload of the second synchronization signal.

In an implementation, the apparatus is a communication device. When the apparatus is a communication device, the transceiver unit (or referred to as a communication unit) may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes at least one processor, configured to execute a computer program or instructions stored in a memory, to perform the method according to any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device.

In another implementation, the apparatus is a chip, a chip system, or a circuit used in a device.

According to a sixth aspect, this application provides a processor, configured to perform the methods according to the foregoing aspects.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code to be executed by a device, and the program code is used to perform the method according to any one of the possible implementations of the first aspect to the fourth aspect.

According to an eighth aspect, a computer program product including instructions is provided. When the computer program product runs on a computer, the computer is enabled to perform the method according to any one of the possible implementations of the first aspect and the second aspect.

According to a ninth aspect, a communication system is provided, including one or both of the foregoing first terminal device and the foregoing second terminal device.

**BRIEF DESCRIPTION OF DRAWINGS**

FIG. 1 is a diagram of a wireless communication system applicable to an embodiment of this application;
FIG. 2 is a diagram of a wireless communication system applicable to another embodiment of this application;
FIG. 3 is a diagram of a logical slot according to an embodiment of this application;
FIG. 4 is a schematic flowchart of a communication method 400 according to an embodiment of this application;
FIG. 5 is a diagram of a distributed beam sweeping scenario according to an embodiment of this application;
FIG. 6 is a diagram of a beam sweeping sequence of a terminal device according to an embodiment of this application;
FIG. 7 is a diagram of a first pattern according to an embodiment of this application;
FIG. 8 is a diagram of another first pattern according to an embodiment of this application;
FIG. 9 is a diagram of another first pattern according to an embodiment of this application;
FIG. 10 is a diagram of another first pattern according to an embodiment of this application;
FIG. 11 is a diagram of a structure of a communication apparatus according to an embodiment of this application; and
FIG. 12 is a diagram of a structure of another communication apparatus according to an embodiment of this application.

**DESCRIPTION OF EMBODIMENTS**

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. As an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a roadside unit (roadside unit, RSU) or a network device.

A terminal device in embodiments of this application includes various devices having a wireless communication function, and the terminal device may be configured to connect to a person, an object, a machine, and the like. The terminal device may be widely applied to various scenarios, for example, cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city drone, robot, remote sensing, passive sensing, positioning, navigation and tracking, and autonomous delivery scenarios. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, an aircraft (for example, an unmanned aerial vehicle, a helicopter, a multi-helicopter, a four-helicopter, or an airplane), a ship, a remote control device, a smart home device, or an industrial device, or may be an apparatus built in the foregoing device (for example, a communication module, a modem, or a chip in the foregoing device), or may be another processing device connected to the wireless modem. For ease of description, an example in which the terminal device is a terminal or a UE is used below for description.

It should be understood that, in some scenarios, the UE may alternatively serve as a base station. For example, the UE may serve as a scheduling entity that provides a sidelink signal between UEs in a V2X scenario, a D2D scenario, a P2P scenario, or the like.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, for example, a NodeB (NodeB), an evolved NodeB (evolved NodeB, eNB), a next generation NodeB (next generation NodeB, gNB), a relay station, an access point, a transmission reception point (transmitting and receiving point, TRP), a transmission point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application. For ease of description, an example in which the network device is a base station or a BS is used below for description.

The base station may be fixed or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

The network device and the terminal device may be deployed on land, including an indoor device, an outdoor device, a handheld device, or a vehicle-mounted device; or may be deployed on water; or may be deployed on an airplane, a balloon, and a satellite in the air. Scenarios in which the network device and the terminal device are located are not limited in embodiment of this application. First, a network architecture applicable to this application is briefly described as follows.

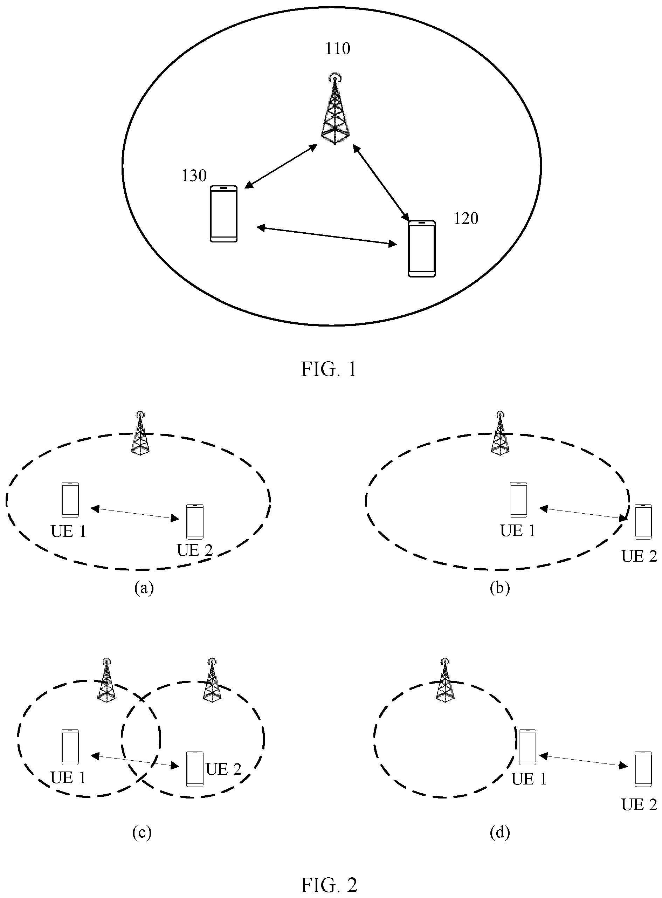

FIG. 1 is a diagram of a wireless communication system applicable to an embodiment of this application. As shown in FIG. 1, the wireless communication system may include at least one network device, for example, a network device 110 shown in FIG. 1. The wireless communication system may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may directly communicate with each other. A link for direct communication between the terminal devices may be referred to as a sidelink (sidelink, SL), and direct communication between the terminal devices may be referred to as SL communication.

When the network device communicates with the terminal device, the network device may manage one or more cells, and one cell may have an integer quantity of terminal devices. Optionally, the network device 110 and the terminal device 120 form one single-cell communication system. Without loss of generality, the cell is referred to as a cell #1. The network device 110 may be a network device in the cell #1, or the network device 110 may serve a terminal device (for example, the terminal device 120) in the cell #1.

It should be noted that the cell may be understood as an area within coverage of a wireless signal of the network device.

FIG. 2 is a diagram of a wireless communication system applicable to another embodiment of this application. As shown in FIG. 2, this embodiment of this application may be applied to an SL communication scenario, and support a communication scenario with network coverage and a communication scenario without network coverage. Scenarios shown in (a) to (c) in FIG. 2 are scenarios in which a UE 1 is in network coverage, and a scenario shown in (d) in FIG. 2 is a scenario in which both the UE 1 and a UE 2 are in no network coverage. In the scenarios shown in (a) to (c) in FIG. 2, the UE 1 may communicate with the UE 2 by using a resource scheduled by a network device, and the resource may be referred to as a licensed resource or a licensed frequency band; or the UE 1 may select a resource from a resource pool through resource self-selection, to communicate with the UE 2, and the resource may be referred to as an unlicensed resource or an unlicensed frequency band. In the scenario shown in (d) in FIG. 2, because both the UE 1 and the UE 2 are within no network coverage, the UE 1 and the UE 2 may communicate through resource self-selection. The resource is a time-frequency resource.

It should be understood that FIG. 1 and FIG. 2 are simplified diagrams of examples for ease of understanding. The wireless communication system may further include another network device or another terminal device that is not shown in FIG. 1 and FIG. 2. Embodiments of this application are applicable to any communication scenario in which a sending device communicates with a receiving device.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to a currently existing system. Therefore, names used when the currently existing system is used as an example for description are all functional descriptions, and specific names are not limited, indicate only functions, and may be correspondingly expanded to another system, for example, a 6G system or a future communication system.

1. Near field communication (proximity communication, PC5) interface

Working scenarios supported by cellular vehicle-to-everything (cellular vehicle-to-everything, C-V2X) include both a scenario with cellular network coverage and a scenario without cellular network deployment. C-V2X may provide two communication interfaces: a short-distance direct communication interface (PC5) between a vehicle, a person, and a road, and a communication interface (Uu) between a terminal and a base station, which can implement reliable communication in a long distance and a larger range. When a terminal device (such as a vehicle-mounted terminal, a smartphone, or a roadside unit) that supports C-V2X is in cellular network coverage, the terminal device may use a Uu interface under control of a cellular network. Regardless of whether there is network coverage, the terminal device may use a PC5 interface to perform V2X communication. C-V2X combines the Uu interface and the PC5 interface to support each other for V2X service transmission, to form effective redundancy to ensure communication reliability.

The protocol defines two resource allocation modes for the PC5 interface: mode 1 and mode 2. In the mode 1, a base station allocates a transmission resource to V2X through the Uu interface. Therefore, a UE in the mode 1 needs to be within network coverage. In the mode 2, a UE autonomously selects to allocate a transmission resource to V2X, and does not need to perform allocation by using a base station. An SL spectrum resource may be shared with an uplink communication resource. In SL communication, the mode 1 and the mode 2 may be allocated to different resource pools, or may share a resource pool. Resource pool sharing can improve resource utilization, but resource conflicts may occur between the mode 1 and the mode 2. Therefore, the UE in the mode 1 notifies the UE in the mode 2 of a resource allocated for future transmission.

2. SL resource pool

SL communication may be performed based on a resource pool (resource pool). The resource pool is a time-frequency resource dedicated to SL communication. Alternatively, the resource pool may be understood as a set of resources that can be used for SL communication, that is, a set of time domain resources and frequency domain resources used for SL communication.

A resource pool used for SL communication may be briefly referred to as a resource pool, or may be referred to as an SL resource pool. For brevity, the following uses the resource pool for description. The resource pool may also be referred to as a channel (channel), an operating channel (Operating channel), a nominal channel bandwidth (nominal channel bandwidth), and a bandwidth (bandwidth). In other words, the resource pool, the channel, and the bandwidth all represent a set of resources that can be used for SL communication. A name of the resource pool is not limited.

Within network coverage, the terminal apparatus may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or UE-specific (UE-specific) RRC signaling of the terminal apparatus. Alternatively, the terminal apparatus may use pre-configured SL resource pool configuration information or SL BWP configuration information, for example, when there is no network coverage. The SL resource pool configuration information includes resource pool resource information, and the resource pool resource information indicates an SL resource pool. The resource pool is a set of time-frequency resources used for sidelink communication between terminal apparatuses. The SL resource pool may further include a code domain resource.

A resource in the SL resource pool includes a resource used for sending and receiving at least one of the following physical channels by the terminal apparatus, for example, a physical sidelink control channel (physical sidelink control channel, PSCCH), where the PSCCH is used to carry SCI; a physical sidelink shared channel (physical sidelink shared channel, PSSCH), where the PSSCH is used to carry at least one of control information, data, sidelink CSI feedback information, and the like; a physical sidelink discovery channel (physical sidelink discovery channel, PSDCH), where the PSDCH is used to carry a discovery message; and a physical sidelink feedback channel (physical sidelink feedback channel, PSFCH), where the PSFCH is used for sidelink feedback information, and the sidelink feedback information may be used for acknowledgment feedback information of data information, for example, a hybrid automatic repeat request (hybrid automatic repeat request, HARQ), an acknowledgment (acknowledgment, ACK), a negative acknowledgment (negative acknowledgment, NACK), or channel state indication (channel state information, CSI) feedback information. The sidelink feedback information may be further used to indicate at least one type of the following information, for example, energy saving information, resource assistance information (including a resource recommended, a resource not recommended, a resource collision, a resource reservation collision, a half-duplex collision that has occurred in the past or is about to occur in the future), and a physical sidelink broadcast channel (physical sidelink broadcast channel, PSBCH), where the PSBCH is used to carry information about sidelink synchronization.

A type of a service carried on the PSSCH may include a unicast communication type, a multicast communication type, and/or a broadcast communication type. In time domain, the SL resource pool includes one or more time units. The time unit may be one or more symbols, one or more slots (slots), one or more mini-slots (mini-slots), one or more subframes, one or more frames, or the like. The one or more time units may be consecutive or discrete in terms of time.

It should be understood that time domain units in one SL resource pool are logically consecutive.

It should be further understood that, in this application, for specific definitions of the symbol, the mini-slot, the slot, the subframe, and the frame, refer to the 3GPP standard. Details are not described herein again.

It should be noted that, in this application, unless a meaning of the time unit is specially specified, a slot is used for description, but the time unit is not limited to only the slot; and unless a meaning of a time-frequency domain unit is specially specified, a subchannel is used for description, but the frequency domain unit is not limited to only the subchannel.

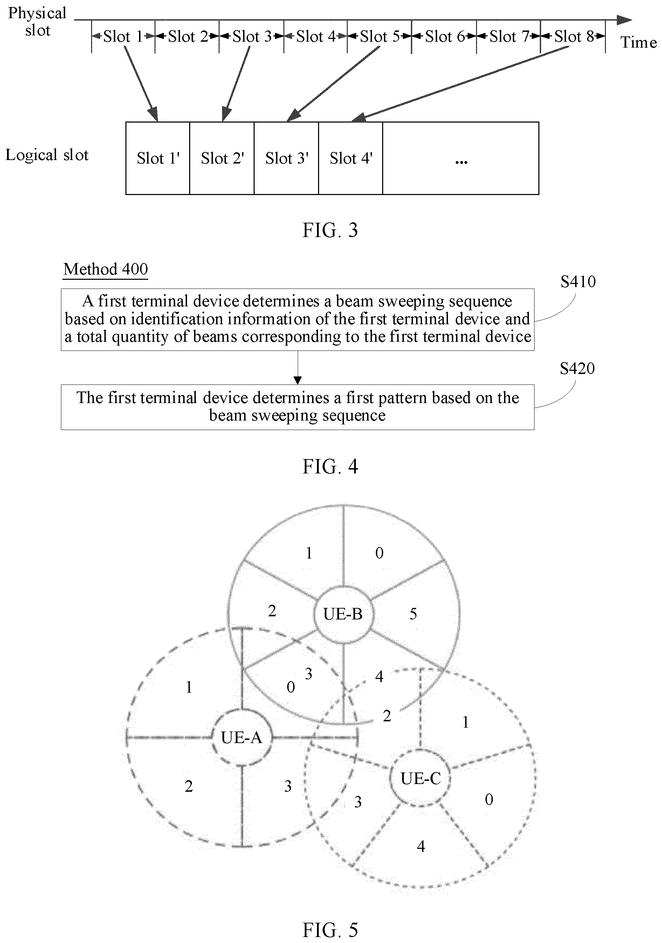

In an example, as shown in FIG. 3, a slot 1 to a slot 8 are consecutive slots in terms of time, and these slots are referred to as physical slots (physical slot). Physical slots, namely, the slot 1, the slot 3, the slot 5, and the slot 8, are configured as slots that belong to one SL resource pool. Slots included in an SL resource pool may be nonconsecutive in terms of time. Therefore, from a perspective of the SL resource pool, the slot 1, the slot 3, the slot 5, and the slot 8 in the physical slots respectively correspond to a slot 1', a slot 2', a slot 3', and a slot 4' in the SL resource pool. In this case, consecutive slots (namely, the slot 1', the slot 2', the slot 3', and the slot 4') included in the SL resource pool are logically consecutive slots in the SL resource pool, and the slots that are logically consecutive but not necessarily consecutive in terms of time are referred to as logical slots (logic slots).

In frequency domain, the SL resource pool includes one or more frequency domain units. The frequency domain unit may be one resource element (resource element, RE), several REs, one resource block (resource block, RB), several RBs, one subchannel (subchannel), or several subchannels. A size of one subchannel indicates a quantity of one or more continuous (continuous) or interlaced (interlaced) RBs included in the subchannel in frequency domain, and the quantity may be an integer such as 10, 12, 15, 20, 25, or 50.

The SL resource pool configuration information may further include PSCCH configuration information. The PSCCH configuration information includes a quantity of symbols occupied by a PSCCH in one slot and a quantity of RBs occupied by the PSCCH in one subchannel. The SL BWP configuration information may include SL resource pool information that is used to configure a quantity of resource pools included in a BWP. The SL BWP configuration information may include SL bandwidth information that indicates a size of a bandwidth for SL communication, for example, indicates that an SL bandwidth is 20 megahertz (MHz). The SL BWP configuration information may further include SL symbol information that indicates a start SL symbol location in one slot and a quantity of occupied consecutive SL symbols. The SL BWP configuration information may further include information about a subcarrier spacing and a cyclic prefix that are of an SL, and the information indicates a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information.

SCI of an NR SL system is classified into first-stage SCI and second-stage SCI. The PSCCH carries the first-stage SCI. The first-stage SCI is used to schedule the second-stage SCI and the PSSCH. Because the SL is a distributed system, all UEs need to correctly decode the first-stage SCI before decoding the second-stage SCI and the PSSCH. However, to reduce complexity of blind detection (blind decoding) performed by the UE on the PSCCH, a resource location of the PSCCH is relatively fixed, and carried first-stage SCI format information is also relatively unique. In other words, the UE does not need to blindly detect a time-frequency resource location of the PSCCH, and does not need to blindly detect SCI in different formats, and the UE only needs to detect, at a fixed time-frequency resource location of the PSCCH, whether there is first-stage SCI. The PSCCH may exist on each subchannel in each slot. To be specific, a time domain start location of one PSCCH is a $2^{nd}$ symbol used for SL transmission in each slot, a length is two or three symbols (determined by resource pool configuration information), a frequency domain location is a smallest PRB index of each subchannel, and a length is at least 10 PRBs (determined by the resource pool configuration information) but does not exceed a size of the subchannel.

A frequency resource assignment field and a time resource assignment field in the first-stage SCI respectively indicate a frequency domain resource and a time domain resource for transmitting the PSSCH. A resource reservation period field indicates that a resource for transmitting the PSSCH is periodically reserved. A value of the resource reservation period field is configured by the network device, pre-configured, or predefined, for example, indicated by using first RRC signaling, and the first RRC signaling may be used to determine sl-ResourceReservePeriod1. A format of the second-stage SCI is indicated by a 2nd-stage SCI format field in the first-stage SCI. An existing second-stage SCI format field is shown in Table 1.

Table 1

| Second-stage SCI format field (Value of 2nd-stage SCI format field) | Second-stage SCI format (2nd-stage SCI format) |
|---|---|
| 00 | SCI format 2-A |
| 01 | SCI format 2-B |
| 10 | SCI format 2-C |
| 11 | Reserved |

In the protocol, a transmission resource of a transmit UE in a user-selected resource mode (mode 2) does not depend on a base station. The transmit UE selects, in a resource selection window, a transmission resource for communication based on a sensing result in a sensing window of the transmit UE.

In an example, it is assumed that the transmit UE triggers resource selection in a slot n. A specific resource selection procedure is as follows:

Step 1: Determine a candidate resource $R_{x,y}$ and a resource selection window $[n + T_1, n + T_2]$ in a unit of one slot and $L_{subCH}$ contiguous subchannels, where $0 \le T_1 \le T_{proc,1}^{SL}$, $T_{proc,1}^{SL}$ is determined in Table 1, $\mu_{SL}$ is a configured subcarrier spacing, and $T_1$ is selected based on implementation. If $T_{2min}$ (higher-layer configuration) is less than a remaining PDB (data packet delay), $T_{2min} \le T_2 \le PDB$ (data packet delay), and $T_2$ is selected based on implementation; otherwise, $T_2$ is equal to the remaining PDB.

Step 2: Determine a sensing window $\left[n - T_0, n - T_{proc,0}^{SL}\right)$, where $T_0$ is configured by a higher layer parameter, and $T_{proc,0}^{SL}$ is determined in Table 2.

Table 2

| $\mu_{SL}$ | $T_{proc,1}^{SL}$ [slot] |
|---|---|
| 0 | 3 |
| 1 | 5 |
| 2 | 9 |
| 3 | 17 |

Step 3: Determine a reference signal received power (reference signal received power, RSRP) threshold $Th(p_i, p_j)$, where the RSRP threshold and TX of to-be-sent data are related to a priority RX indicated by received sidelink control information (sidelink control information, SCI), and $Th(p_i, p_j)$ is specifically an $(RX+(TX-1)*8)^{th}$ threshold in an RSRP threshold set configured for a resource pool.

Step 4: Initialize an available resource set $S_A$ to include all time-frequency resources in the resource selection window.

Step 5: Exclude the following time-frequency resources from A: slots reserved for all period resources configured in a resource pool corresponding to a slot (a sending slot) that is not sensed in the sensing window.

Step 5a: If the time-frequency resources excluded from A are less than X% of the total resources in the resource selection window, perform initialization in step 4 again.

Step 6: Continue to exclude the following time-frequency resources from A: received first-stage SCI is successfully decoded, a result of performing RSRP measurement on a PSSCH demodulation reference signal (demodulation reference signal, DMRS) of a time-frequency resource reserved by the received first-stage SCI is greater than the RSRP threshold determined in step 3, and the time-frequency resource reserved by the received first-stage SCI is in a resource selection window, including a retransmission resource indicated by the first-stage SCI and a periodically reserved resource.

Step 7: If remaining resources in SA are less than X% of the total resources in the resource selection window, and a value of X% is configured by the resource pool and is related to *rio*TX, increase the RSRP threshold determined in step 3 (increase by 3 each time), until the remaining resources in SA are not less than X% of the total resources in the resource selection window, and continue to perform step 4.

$S_A$ is reported to a higher layer (for example, a MAC layer), and time-frequency resources $(r_0, r_1, r_2, ... )$ are

randomly selected from $S_A$ to send data. Before sending the data, resource re-evaluation is performed on $(r_0, r_1, r_2, ...)$, and after re-evaluation, preemption detection is performed on resources $(r'_0, r'_1, r'_2, ...)$ selected from $S_A$.

A user performs resource re-evaluation and preemption detection in at least a slot m-T3 ( $T_3 = T_{proc,1}^{SL}$ ). and the UE may additionally trigger resource re-evaluation and/or preemption detection before and after the slot m-T3 based on implementation. A method for determining whether $(r_0, r_1, r_2, ...)$ and $(r'_0, r'_1, r'_2, ...)$ need to be excluded is the same as that in step 7, and one of the following conditions is met:

(1) An sl-PreemptionEnable parameter is provided and is configured to be enabled, and TX>RX.
(2) An sl-PreemptionEnable parameter is provided and is not configured to be enabled, RX<pre, and TX>pre, where pre is configured by a higher layer. If $r_i$ and/or $r'_i$ in $(r_0, r_1, r_2, ...)$ and $(r'_0, r'_1, r'_2, ...)$ do/does not belong to $S_A$ (that is, $r_i$ and $r'_i$ are excluded during re-evaluation and/or preemption detection), $r_i$ and/or $r'_i$ are/is reselected. A slot m is a next slot to be sent, that is, the slot m belongs to $(r_0, r_1, r_2, ...)$ and $(r'_0, r'_1, r'_2, ...)$ .

4. Sidelink synchronization signal block (sidelink synchronization signal block, SL-SSB)

Currently, the SL-SSB is used only for synchronization, and is not used for SL beam management. Table 3 shows a frame structure of the SL-SSB, including a sidelink primary synchronization signal (sidelink primary synchronization signal, SL-PSS), a sidelink secondary synchronization signal (sidelink secondary synchronization signal, SL-SSS), a physical sidelink broadcast channel (physical sidelink broadcast channel, PSBCH), and a gap symbol (GAP).

Table 3

| PSBCH | SL-PSS | SL-PSS | SL-SSS | SL-SSS | PSBCH | PSBCH | PSBCH | PSBCH | PSBCH | PSBCH | PSBCH | PSBCH | GAP |
|---|---|---|---|---|---|---|---|---|---|---|---|---|---|

Similar to an SSB, there are two SL-PSS sequences in the SL-SSB, and when the SL-PSS sequence provides timing, there are 336 SL-SSS sequences. Therefore, a total of 672 SL-SSIDs may be determined based on the SL-PSS and SL-SSS sequence types. According to an existing standard, the following functions may be implemented by configuring different SL-SSIDs for SL-SSBs:

Identify a synchronization source type: A synchronization source in the existing standard includes a global navigation satellite system (global navigation satellite system, GNSS), a gNB, a reference UE, and the like. Different SL-SSIDs are configured for different SL-SSBs, so that a receive UE is capable of identifying the synchronization source type. For example, it is pointed out in the conventional technology that, when the SL-SSID is 0 or 336, it may indicate that the synchronization source type is the GNSS.

Identify whether a synchronization source is within or out of coverage: It is pointed out in the conventional technology that the synchronization source within the cell coverage can use an SL-SSID ranging from 1 to 335, and the synchronization source out of the cell coverage can use an SL-SSID ranging from 337 to 671.

Identify whether the transmit UE is directly or indirectly connected to a synchronization source: It is pointed out in the conventional technology that, when sending an SL-SSB, the transmit UE may use an SL-SSID based on whether the transmit UE is directly or indirectly connected to the synchronization source. The SL-SSID used by the transmit UE directly connected to the synchronization source reflects a relatively high synchronization priority of the transmit UE. The SL-SSID used by the transmit UE indirectly connected to the synchronization source reflects a relatively low synchronization priority of the transmit UE.

In addition, an SL-SSB sending method in long term evolution internet of vehicles (LTE V2X, LTE-V) is still used in the existing technology. SL-SSB sending may be triggered by the gNB or a UE, and SL-SSB sending is triggered for synchronization. Currently, the transmit UE does not trigger SL-SSB sending of the transmit UE due to a need of performing SL beam training with the receive UE.

3. Beam management

Beam management is an important technology proposed by 5G NR for frequency range 2 (frequency range 2, FR2). An FR2 frequency range is 24250 MHz to 52600 MHz. Beam management is a process in which a 5G base station gNB and a UE obtain and maintain a beam set used for sending and receiving.

Beam management includes two important functions: beam training and beam failure recovery.

In an example, beam training includes transmit beam training and receive beam training, and may be divided into three steps. Operations of the steps are summarized as follows:

Step 1: The gNB sends a reference signal (Reference Signal, RS) based on a transmit beam set, where transmit beams in the set correspond to different transmit directions, and the UE selects a transmit beam of the gNB and a receive beam of the UE through beam measurement and feedback.

Step 2: On the basis of P-1, the gNB sends an RS based on a smaller transmit beam set, and the UE performs beam measurement and feedback, to improve the transmit beam of the gNB.

Step 3: The gNB sends an RS by using a transmit beam, and the UE performs beam measurement, to improve the receive beam of the UE.

Based on the foregoing three steps, downlink beam training of the 5G NR is performed. Particularly, in step 1 of beam training, the RS may be a synchronization signal block (synchronization signal block, SSB). Therefore, the gNB may configure a maximum of 64 transmit beams, where each beam corresponds to one SSB and a time-frequency resource used by the UE for feedback. The base station sequentially sends an SSB on each beam in a sweeping manner, and the UE performs measurement to obtain a reference signal received power (reference signal received power, RSRP) of the SSB and performs feedback.

Specifically, the SSB includes two types of synchronization signals: a primary synchronization signal (primary synchronization signal, PSS) and a secondary synchronization signal (secondary synchronization signal, SSS). Sequences of the two types of synchronization signals are generated based on a synchronization signal identifier (synchronization signal identifier, SSID). Specifically, the SSID corresponds to a physical layer cell identifier (physical layer cell ID), and the identifier is determined by using the following formula:

$$N_{ID}^{cell} = 3N_{ID}^{(1)} + N_{ID}^{(2)}$$

$N_{ID}^{(1)} \in \{0, 1, \dots, 335\}$ , and  $N_{ID}^{(2)} \in \{0, 1, 2\}$ . The sequence of the PSS is generated based on $N_{ID}^{(2)}$ , and the

sequence of the SSS is generated based on $N_{ID}^{(1)}$ and $N_{ID}^{(2)}$. After receiving the SSB, the UE may obtain corresponding $N_{ID}^{(1)}$ and $N_{ID}^{(2)}$ by performing blind detection on the PSS and the SSS, and correspondingly obtain $N_{ID}^{cell}$. Based on $N_{ID}^{cell}$ or the corresponding SSID, the UE is capable of distinguishing an SSB sent by each gNB.

In a reference workflow of beamforming in a multiple-input multiple-output (multiple-input multiple-output, MIMO) system, beam management includes the following technical points:

> beam determination (beam determination): a process in which a BS or a UE selects a transmit beam or a receive beam of the BS or the UE;
> beam measurement (beam measurement): a process in which a BS or a UE measures a received beamformed signal;
> beam reporting (beam reporting): a process in which a UE reports a beam measurement result to a base station; and
> beam sweeping (beam sweeping): a process in which a BS or a UE sequentially selects, in a specified sweeping manner within a time period, a beam for sending or receiving, so as to cover a spatial area.

Based on the foregoing technical points and specific operations of three states, downlink beam management is performed.

In an example, a basic procedure is as follows: The BS configures a maximum of 64 beam directions, where each beam direction corresponds to one SSB and a time-frequency resource used by the UE for beam reporting. The BS sequentially sends an SSB to each direction in a sweeping manner, and the UE performs beam measurement to obtain a reference signal received power (Reference Signal Received Power, RSRP) of the SSB. The UE needs to map the measured SSB RSRP to a 6-bit SSB sequence number. Therefore, the UE obtains three least significant bits from a physical broadcast channel (Physical Broadcast Channel, PBCH) demodulation reference signal (Demodulation Reference Signal, DMRS), obtains three most significant bits from PBCH payload bits, and obtains a sequence number of the received SSB after combination. The PBCH DMRS is generated based on a pseudo-random sequence, and a manner of carrying the three least significant bits of the SSB sequence number is to determine an initial value $c_{init}$ of the pseudo-random sequence by using the three bits. Specifically, a process of generating the PBCH DMRS is:

$$r(n) = \frac{1}{\sqrt{2}}\big(1 - 2 \cdot c(2n)\big) + j\frac{1}{\sqrt{2}}\big(1 - 2 \cdot c(2n + 1)\big).$$

$r(n)$ is the PBCH DMRS sequence, and $c(n)$ is the pseudo-random sequence, and is determined by using the following formula:

$$c(n) = \big(x_1(n + N_C) + x_2(n + N_C)\big)\mathrm{mod}\ 2.$$

$$x_1(n + 31) = \big(x_1(n + 3) + x_1(n)\big)\mathrm{mod}\ 2.$$

$$x_2(n + 31) = \big(x_2(n + 3) + x_2(n + 2) + x_2(n + 1) + x_2(n)\big)\mathrm{mod}\ 2.$$

$N_C = 1600$, $x_1(n)$ and $x_2(n)$ are two m sequences, 31 initial values of $x_1(n)$ are $x_1(0) = 1$, $x_1(n) = 0$, and $n = 1, 2, ..., 30$, and 31 initial values of $x_2(n)$ are determined by $c_{init} = \sum_{i=0}^{30} x_2(i) \cdot 2^i$. For the PBCH DMRS, a setting manner of $c_{init}$ is:

$$c_{init} = 2^{11}(\bar{\iota}_{SSB} + 1)\big(\lfloor N_{ID}^{cell}/4 \rfloor + 1\big) + 2^6(\bar{\iota}_{SSB} + 1) + \big(N_{ID}^{cell}\ \mathrm{mod}\ 4\big).$$

$N_{ID}^{cell}$ is a physical layer cell identifier. When a maximum quantity of SSBs is 4, $\bar{\iota}_{SSB} = i_{SSB} + 4n_{hf}$, where $i_{SSB}$ indicates two least significant bits of an SSB sequence number, and $n_{hf}$ indicates whether an SSB is located in a first half part or a second half part of a frame in which the SSB is located. If the SSB is located in the first half part, $n_{nf} = 0$. If the SSB is located in the second half part, $n_{nf} = 1$. When the maximum quantity of SSBs is 8 or 64, $\bar{\iota}_{SSB} = i_{SSB}$ indicates three least significant bits of the SSB sequence number. The UE obtains the SSB sequence number by performing blind detection on the PBCH DMRS. Then, the UE selects an SSB set through RSRP comparison, and reports an SSB sequence number in the set and a corresponding RSRP to the base station on a given time-frequency resource. The base station performs beam determination by using reported information. In this way, an initial beam selection process is completed. A similar procedure is used for uplink beam management, but different reference signals are used.

According to the foregoing descriptions, a beam management procedure based on FR2 is mainly based on the BS and the UE, that is, the BS performs coarse beam sweeping, and the UE perform s receiving. For a fully distributed SL mode2 system, the beam management procedure described above is no longer used. In the beam management system described above, the UEs are in a peer relationship, and the BS performs unified coordinated scheduling. Therefore, in the distributed system, whether the UE performs receiving or sending cannot be determined. In the SL system, the SSB is sent in a broadcast manner, but an existing mechanism cannot be performed due to initial synchronization of an FR2-based directional beam. How to support initial synchronization or access of an FR2 beam in a distributed SL system becomes a research hotspot.

Based on the foregoing existing technical problem, this application provides a communication method. The following describes in detail the method provided in embodiments of this application with reference to the accompanying drawings. Embodiments provided in this application may be applied to the network architecture shown in FIG. 1 or FIG. 2. This is not limited.

FIG. 4 is a schematic flowchart of a communication method 400 according to an embodiment of this application. The method 400 may include the following steps.

S410: A first terminal device determines a beam sweeping sequence based on identification information of the first terminal device and a total quantity of beams of the first terminal device.

The identification information of the first terminal device may be configured by a system, or the identification information is pre-configured. An identifier of the first terminal device is unique.

The total quantity of beams of the first terminal device, which is also referred to as a total beam quantity of the first terminal device, is a sum of quantities of beams in all possible beam directions of the first terminal device.

In a possible implementation, for example, FIG. 5 is a diagram of a distributed beam sweeping scenario according to an embodiment of this application. As shown in FIG. 5, a UE-A, a UE-B, and a UE-C are three UEs in a distributed SL system. The UE-A has four beam directions, the UE-B has six beam directions, and the UE-C has five beam directions. It can be learned that a total quantity of beams included in the UE-A is 4, a total quantity of beams of the UE-B is 6, and a total quantity of beams of the UE-C is 5. The UE may perform receiving and sending in a corresponding beam direction based on related configuration information of the UE.

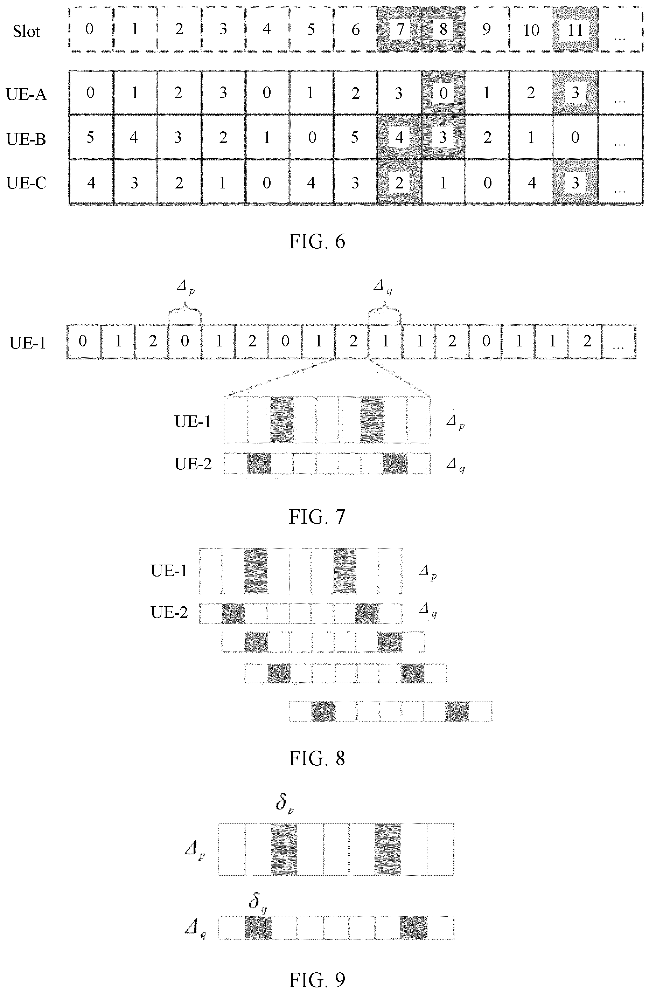

In an example, it is assumed that the UE can perform receiving and sending in only one beam direction at a same moment. As shown in FIG. 6, in a slot range, FIG. 6 shows a beam sweeping sequence of the UE. With reference to FIG. 5 and FIG. 6, it can be learned that a beam sweeping direction of the UE-A is counterclockwise, and beam sweeping directions of the UE-B and the UE-C are clockwise.

For example, at a location of a slot 7, the UE-B performs receiving and sending on a beam 4, the UE-C performs receiving and sending on a beam 2, and the UE-B and the UE-C are located in a corresponding beam range. It can be learned that, in the slot 7, beam directions of the UE-B and the UE-C point to each other. This case may be referred to as follows: In the slot 7, the beams of the UE-B and the UE-C are aligned; or in the slot 7, the beam directions of the UE-B and the UE-C are opposite; or there may be another expression. This is not limited in this application.

For example, at a location of a slot 8, the UE-A performs receiving and sending on a beam 0, the UE-B performs receiving and sending on a beam 3, and the UE-A and the UE-B are located in a corresponding beam range. It can be learned that, in the slot 8, the beams of the UE-A and the UE-B point to each other, that is, in the slot 8, the beams of the UE-A and the UE-B are aligned.

For example, at a location of a slot 11, the UE-A performs receiving and sending on a beam 3, the UE-C performs receiving and sending on a beam 3, and the UE-A and the UE-C are located in a corresponding beam range. It can be learned that, in the slot 11, the beams of the UE-A and the UE-C point to each other, that is, in the slot 11, the beams of the UE-A and the UE-C are aligned.

It should be understood that the beam sweeping sequence can ensure that a beam of the first terminal device can be aligned with a beam of another terminal device in a beam direction during beam sweeping.

It should be further understood that FIG. 5 and FIG. 6 are merely specific examples of beam alignment between UEs, and do not constitute any limitation on embodiments of this application.

Optionally, the first terminal device determines a first sequence based on the identification information, and the first terminal device determines the beam sweeping sequence based on the first sequence and the total quantity of beams of the first terminal device.

In a possible implementation, for example, the identification information ID of the first terminal device is represented as a sequence in a binary form, and is denoted as an information sequence a, and a length of the sequence is denoted as J. Assuming that an ID length of the first terminal device is 12 bits, a=000000010001, and J=12. In other words, the information sequence of the identification information of the first terminal device is a=000000010001.

The first terminal device determines the first sequence based on the identification information. For example, the first sequence A determined by the first terminal device based on the information sequence a is:

$$A = 0(l_1)\|a_1\|10\|a_2\|1(l_2).$$

$0(l_1)$ represents an all-0 vector whose length is $l_1$, $1(l_2)$ represents an all-1 vector whose length is $l_2$, $a_1$=[a(1), a(k-1)], $a_2$=[a(k), a(J)], and $k = \left\lfloor \frac{J}{2} \right\rfloor, l_1 = \left\lceil \frac{k}{2} \right\rceil + 1, l_2 = \left\lceil \frac{k}{2} \right\rceil$. x‖y indicates that two sequences x and y are joined into one sequence. A length is denoted as L.

Further, the following may be determined based on the information sequence a:

$$k = \left\lfloor \frac{J}{2} \right\rfloor = 6;$$

$$l_1 = \left\lceil \frac{k}{2} \right\rceil + 1 = 4;$$

$$l_2 = \left\lceil \frac{k}{2} \right\rceil = 3;$$

$$a_1 = [a(1), \quad a(k-1)] = 00000;$$

$$a_2 = [a(k), \quad a(J)] = 0010001; \text{ and}$$

$$A = 0(l_1)\|a_1\|10\|a_2\|1(l_2) = 0000\ 0000\ 0100\ 0100\ 0111\ 1.$$

In other words, the first sequence A may be determined based on the information sequence a. The first sequence A may also be referred to as a cyclic orthogonal binary sequence A.

Optionally, the first terminal device determines the beam sweeping sequence based on the first sequence and the total quantity of beams of the first terminal device.

In an example, when determining that the total quantity of beams of the first terminal device is N, the first terminal device further determines parameters p and q based on N. p is a minimum prime number greater than or equal to N, and p and the length L of the first sequence are mutually prime.

q is $2^b$, and $2^b$ is a minimum positive number greater than or equal to N, that is, $2^b \geq N$.

A possible manner of generating the beam sweeping sequence e is:

$$e_t = \begin{cases} t \bmod p & A_t = 0, t \bmod p < N \\ t \bmod q & A_t = 1, t \bmod q < N \\ rand(N-1) & \text{others} \end{cases} \tag{1}$$

In the foregoing manner of generating the beam sweeping sequence e, x mod y represents a modulo operation, or x mod y a modulo operation, that is, x-y[x/y]; the formula "[x/y]" represents rounding x/y; and rand(x) represents a random integer of [0, x].

Based on the first sequence A = 0000 0000 0100 0100 0111 1 determined in the foregoing example, assuming that the total quantity of beams corresponding to the first terminal device is N=3, p=3, and q=4. According to the foregoing manner of generating the beam sweeping sequence e, e = 0120 1201 2112 0112 012r 0 ... may be determined, where r in e indicates that the first terminal device randomly selects a transmit beam direction, and the beam sweeping sequence e may be continuously and repeatedly generated based on the first sequence A.

In another example, when determining that the total quantity of beams of the first terminal device is N, the first terminal device further determines parameters p and q based on N. p is a minimum odd prime number greater than max{3, N}, and p and the length L of the first sequence are mutually prime. $q = 2^{b_1}3^{b_2}$, where $b_1$ and $b_2$ are respectively minimized positive integers of q - N selected from $[0, \lceil log_2 N \rceil]$ and $[0, \lceil log_3 N \rceil]$ under a constraint of $q \geq N$.

Another manner of generating the beam sweeping sequence e is:

$$e_t = \begin{cases} (t \bmod p) \bmod N & A_t = 0 \\ (t \bmod q) \bmod N & A_t = 1 \end{cases} \qquad (2)$$

In the foregoing manner of generating the beam sweeping generation sequence e, *x mod y* represents a modulo operation, or *x* mod y, that is, x-y[x/y]; and the formula "[x/y]" represents rounding x/y.

Based on the first sequence A = 0000 0000 0100 0100 0111 1 determined in the foregoing example, assuming that the total quantity of beams corresponding to the first terminal device is N=3, p=5, and q=3. According to the foregoing manner of generating the beam sweeping sequence *e*, *e* = 0120 1012 0001 2110 1201 2 ... may be determined, where the beam sweeping sequence e may be continuously and repeatedly generated based on the first sequence A.

It should be understood that the beam sweeping sequence e may be generated by using the formula (2), or the beam sweeping sequence e may be generated by using the formula (1). This is not limited in this application.

It should be further understood that, after generating the beam sweeping sequence, the first terminal device determines a first pattern based on the beam sweeping sequence. In other words, the method shown in FIG. 4 further includes the following step.

S420: The first terminal device determines the first pattern based on the beam sweeping sequence, and the first terminal device sends a first synchronization signal on the beam sweeping sequence based on the first pattern.

Specifically, the first terminal device determines the beam sweeping sequence based on the identification information and the total quantity of beams, and further determines the first pattern based on the beam sweeping sequence.

In a possible implementation, the first pattern further needs to be determined based on a quantity of time units.

For example, in the SL system, one slot includes 14 symbols. If a time for sweeping one beam direction is one slot, and a time unit is one symbol, the quantity of time units is 14. The quantity of time units is determined by a system slot structure. In this case, the first pattern is determined based on the quantity 14 of time units and the beam sweeping sequence.

For another example, if a time for sweeping one beam direction is two slots, the quantity of time units is 28=2*14. In this case, the first pattern is determined based on the quantity 28 of time units and the beam sweeping sequence.

The first pattern indicates a time unit for sending the first synchronization signal on a beam of the first terminal device and/or a time unit for receiving the first synchronization signal on the beam.

Optionally, the first synchronization signal may be a channel state information reference signal (Channel State Information Reference Signal, CSI-RS), a sidelink channel state information reference signal (sidelink Channel State Information Reference Signal, SL CSI-RS), an SSB signal, or an SL-SSB signal. In this embodiment of this application, the method in this application is mainly described in detail by using an example in which the first synchronization information is an SSB signal. The first synchronization signal may alternatively be other information. This is not specifically limited in this application.

It should be understood that the first pattern may indicate a time unit for sending the first synchronization signal and/or a time unit for receiving the first synchronization signal on one or more specific beams by the first terminal device; or the first pattern may indicate that the first terminal device sends the first synchronization signal and/or receives the first synchronization signal in at least one specific time unit corresponding to one or more specific beams. This is not limited in this application.

It should be further understood that the first terminal device determines the first pattern based on the beam sweeping sequence. The first terminal device may design the first patterns in all beam sweeping directions based on the beam sweeping sequence, that is, the first patterns in the beam directions may be the same or different, to support success of initial synchronization or access of FR2 beams in the distributed SL system.

For the beam sweeping sequence determined by the first terminal device, to ensure that the first terminal device can align a beam direction with a beam direction of another terminal device (referred to as a second terminal device in embodiments of this application) when performing beam sweeping, and to complete initial beam synchronization or access, the first terminal device and the second terminal device further need to complete mutual forwarding of synchronization information (for example, an SSB) within a beam alignment time.

In a possible implementation, the first terminal device determines the first pattern based on the beam sweeping sequence. A specific design of the first pattern is to ensure that any two terminal devices can complete initial beam synchronization or access within a specific period, to establish a communication link.

In an example, as shown in FIG. 7, according to the formula (1) of generating the beam sweeping sequence e in step S410, the beam sweeping sequence e = 0120 1201 2112 0112 ... determined by the first terminal device is obtained. The first pattern corresponding to the first terminal device is determined according to the formula (1), that is, the first pattern shown in FIG. 7 is a pattern $\Delta_p$ and a pattern $\Delta_q$. It is determined according to the formula (1) that, when $A_t = 0$, the first pattern determined based on the beam sweeping sequence $e_t$ is the pattern $\Delta_p$; when $A_t = 1$, the first pattern determined based on the beam sweeping sequence $e_t$ is the pattern $\Delta_q$; or when the beam sweeping sequence is $e_t = r$, the first pattern is randomly configured as the pattern $\Delta_p$ or the pattern $\Delta_q$.

It should be understood that, according to the foregoing specific procedure of generating the beam sweeping sequence, for the first terminal device and the second terminal device, the pattern $\Delta_p$ of the first terminal device and a pattern $\Delta_q$ of the second terminal device definitely overlap, and a pattern $\Delta_p$ of the second terminal device and the pattern $\Delta_q$ of the first terminal device overlap. For example, as shown in FIG. 7, when the beam sweeping sequence of the first terminal device sweeps a beam direction "2", the pattern $\Delta_p$ of the first terminal device and the pattern $\Delta_q$ of the second terminal device overlap.

In another possible implementation, the first terminal device divides a first sweeping time into n time units based on the beam sweeping sequence, where the first sweeping time is a time for sending or receiving a beam. The first pattern indicates the first terminal device to send or receive the first synchronization signal in at least one of the n time units, where "n" is a positive integer greater than or equal to 9.

It should be understood that the time unit in embodiments of this application may be one symbol or several symbols, one slot or several slots, or the like. This is not limited in this application.

In an example, as shown in FIG. 7, in a beam direction "2" swept by the beam sweeping sequence of the first terminal device, the pattern $\Delta_p$ of the first terminal device and the pattern $\Delta_q$ of the second terminal device overlap. The first terminal device determines a sweeping time for sweeping the beam direction "2" as the first sweeping time, and divides the first sweeping time into nine time units. The first terminal device and the second terminal device send or receive the first synchronization signal in at least one of the time units obtained through division.

In still another possible implementation, the first pattern further indicates the first terminal device to send the first synchronization signal in an $i^{th}$ time unit and an $(n-i)^{th}$ time unit, and/or the first pattern further indicates the first terminal device to receive the first synchronization signal in a time unit other than the $i^{th}$ time unit and the $(n-i)^{th}$ time unit in the n time units, where values of i and n-i are all positive integers.

It should be understood that, when the first sweeping time sequence is divided into the n time units, and a $1^{st}$ time unit is calculated from 0, a last time unit in the first time sequence is n-1. It can be learned that i starts from 0, and the first terminal device sends the first synchronization signal in the $i^{th}$ time unit and an $(n-i-1)^{th}$ time unit, where $i < \left\lfloor \dfrac{n}{2} \right\rfloor$. If the $1^{st}$ time unit is calculated from 1, the last time unit in the first time sequence is n. It can be learned that i starts from 1, and the first terminal device sends the first synchronization signal in the $i^{th}$ time unit and an $(n-i+1)^{th}$ time unit, where $i \le \left\lfloor \dfrac{n}{2} \right\rfloor$.

In an example, as shown in FIG. 7, when a beam direction "2" swept by a beam sweeping sequence of a UE-1 is aligned with a beam of a UE-2, in nine time units obtained by the UE-1 through division, a sequence number of a $1^{st}$ time unit is calculated from "1", and a first pattern (pattern $\Delta_p$) of the UE-1 separately sends a beam in a $3^{rd}$ time unit and a $7^{th}$ time unit, and receives a beam in another time unit; and a first pattern (pattern $\Delta_q$) of the UE-2 separately sends a beam in a $2^{nd}$ time unit and an 8th time unit, and receives a beam in another time unit. It can be learned that, in a case in which beams of the UE-1 and the UE-2 are aligned, in the $2^{nd}$, the $3^{rd}$, the $7^{th}$, and the $8^{th}$ time units in the n time units, both the UE-1 and the UE-2 can complete mutual beam information receiving and sending, that is, initial beam synchronization or access between the UE-1 and the UE-2 can be implemented.

In another example, when beams of the UE-1 and the UE-2 are not aligned, that is, the UE-1 and the UE-2 are not synchronized, both the UE-1 and the UE-2 can complete mutual beam information receiving and sending in at least one time unit. Details are shown in FIG. 8.

Case 1: When the beams of the UE-1 and the UE-2 are not aligned, both the UE-1 and the UE-2 can complete mutual beam information receiving and sending in a $9^{th}$ time unit of the UE-1.

Case 2: When the beams of the UE-1 and the UE-2 are not aligned, both the UE-1 and the UE-2 can complete mutual beam information receiving and sending in a $4^{th}$ time unit of the UE-1.

Case 3: When the beams of the UE-1 and the UE-2 are not aligned, both the UE-1 and the UE-2 can complete mutual beam information receiving and sending in a $6^{th}$ time unit of the UE-1.

In still another possible implementation, when at least one beam direction of the first terminal device is opposite to that of the second terminal device, a time unit for sending the first synchronization signal by the first terminal device within the first sweeping time and a time unit for sending the first synchronization signal by the second terminal device within the first sweeping time meet a first preset condition.

In an example, as shown in FIG. 9, a location for sending the first synchronization signal based on the first pattern (pattern $\Delta_p$) of the UE-1 is $\delta_p$ and $\Delta - \delta_p$, and a location for sending the first synchronization signal based on the first pattern (pattern $\Delta_q$) of the UE-2 is $\delta_q$ and $\Delta - \delta_q$. When $\Delta = 9$, similar to the method shown in FIG. 7, when the UE-1 and the UE-2 are synchronized, there are four time units, and the UE-1 and the UE-2 may complete mutual receiving and sending; or when the UE-1 and the UE-2 are not synchronized, there is at least one time unit to ensure that the UE-1 and the UE-2 can complete mutual receiving and sending. When $\Delta > 9$, to ensure that there is at least one time unit in which the UE-1 and the UE-2 can complete mutual beam information receiving and sending, that is, in a design of the first pattern, locations of time units in which the UE-1 and the UE-2 send the first synchronization signal meet a first preset condition, where the first

preset condition is:

$$(a)\ \delta_p > \delta_q;$$

$$(b)\ \delta_p \leq 2\delta_q;$$

$$(c)\ \frac{\Delta}{2} \geq \delta_p + \delta_q;$$

$$(d)\ \delta_p \leq \frac{\Delta}{3};\ \delta_q < \frac{\Delta}{4};$$

and

$$(e)\ \text{if}\ \Delta \leq 2\delta_p + \delta_q\ and\ \Delta \geq \delta_p + \delta_q,\ \Delta \leq \delta_p + 2\delta_q.$$

It should be understood that the beam sending locations $\delta_p$ and $\Delta\text{-}\delta_p$ of the UE-1 and the beam sending location $\delta_q$ and $\Delta\text{-}\delta_q$ of the UE-2 need to meet all of the foregoing conditions a, b, c, d, and e. Regardless of whether the UE-1 and the UE-2 are synchronized or whether the beams the UE-1 and the UE-2 are aligned, it can be ensured that the UE-1 and the UE-2 can complete mutual beam information receiving and sending in at least one time unit. The first preset condition is also applicable to a case in which $\Delta$= 9.

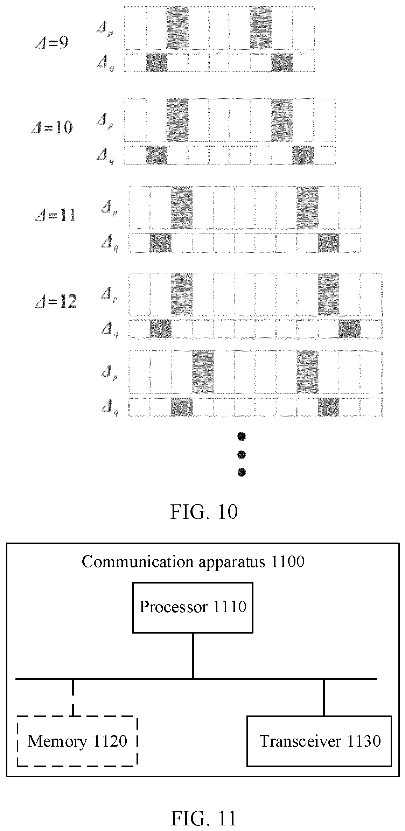

Based on the foregoing first preset condition, the following shows in detail with reference to FIG. 10, when $\Delta$= 10, 11, 12, a location for sending the first synchronization signal based on the first pattern (pattern $\Delta_p$ ) of the UE-1 and a location for sending the first synchronization signal based on the first pattern (pattern $\Delta_q$) of the UE-2.

As shown in FIG. 10, when $\Delta$= 10, based on the pattern $\Delta_p$, the beam is sent in the 3rd time unit and the 8th time unit, and the beam is received in another time unit; and based on the pattern $\Delta_q$, the beam is sent in the 2nd time unit and the 9th time unit, and the beam is received in another time unit. In the 2nd, the 3rd, the 8th, and the 9th time units, based on the pattern $\Delta_p$ and the pattern $\Delta_q$, mutual beam information receiving and sending can be completed. This ensures that at least two UEs can complete initial beam synchronization or access in a specific period, and can complete establishment of a communication link between the UEs.

As shown in FIG. 10, when $\Delta$= 11, based on the pattern $\Delta_p$, the beam is sent in the 3rd time unit and the 9th time unit, and the beam is received in another time unit; and based on the pattern $\Delta_q$, the beam is sent in the 2nd time unit and the 10th time unit, and the beam is received in another time unit. In the 2nd, the 3rd, the 9th, and the 10th time units, the pattern $\Delta_p$ and the pattern $\Delta_q$ can complete mutual beam information receiving and sending. This ensures that at least two UEs can complete initial beam synchronization or access in a specific period, and can complete establishment of a communication link between the UEs.

As shown in FIG. 10, when $\Delta$= 12, based on the pattern $\Delta_p$, the beam is sent in the 3rd time unit and the 10th time unit, and the beam is received in another time unit; and based on the pattern $\Delta_q$, the beam is sent in the 2nd time unit and the 11th time unit, and the beam is received in another time unit. In the 2nd, the 3rd, the 10th, and the 11th time units, the pattern $\Delta_p$ and the pattern $\Delta_q$ can complete mutual receiving and sending. This ensures that at least two UEs can complete initial beam synchronization or access. Alternatively, based on the pattern $\Delta_p$, the beam is sent in the 4th time unit and the 9th time unit, and the beam is received in another time unit; and based on the pattern $\Delta_q$, the beam is sent in the 3rd time unit and the 10th time unit, and the beam is received in another time unit. In the 3rd, the 4th, the 9th, and the 10th time units, the pattern $\Delta_p$ and the pattern $\Delta_q$ can complete mutual receiving and sending, so that at least two UEs can complete initial beam synchronization or access, and a communication link can be established between the UEs.

It should be understood that a value of $\Delta$ may be any positive integer greater than or equal to 12, and is not enumerated herein.

With reference to the examples in FIG. 5 to FIG. 10, it can be learned that, in the method shown in FIG. 4 provided in this embodiment of this application, the first terminal device determines the beam sweeping sequence based on the identification information and the total quantity of beams of the first terminal device, and the first terminal device determines the first pattern based on the beam sweeping sequence, where the first pattern indicates a specific location of a time unit in which the first terminal device sends the first synchronization signal. This ensures that mutual beam information receiving and sending can be implemented between any two terminal devices in a specific period, that is, beam synchronization or initial access between any two terminal devices is completed.

It should be understood that, after step S420, the method shown in FIG. 4 may further include step S430:
The first terminal device receives second synchronization signal from the second terminal device.

Correspondingly, the second terminal device sends the second synchronization signal to the first terminal device.

Specifically, after receiving the second synchronization signal from the second terminal device, the first terminal device determines identification information of the second terminal device based on a synchronization signal identifier (for example, an SL-SSID) in the second synchronization signal, that is, the first terminal device identifies, based on the received second synchronization signal, a terminal device that sends the second synchronization signal.

It should be understood that the first terminal device further distinguishes, based on different SL-SSIDs, terminal devices that perform sending. To implement beam matching, the first terminal device further needs to distinguish each beam of the terminal device based on an index (index) in index information of a received synchronization signal.

Optionally, the first terminal device determines a second beam based on index information of the second synchronization signal. The second beam is a beam used by the second terminal device to send the second synchronization signal.

The index information of the second synchronization signal (for example, an SL-SSB) may be carried by using a PSBCH DMRS, or may be carried by using reserved bits reservedBits (2 bits) in an SL-SSB payload. For the PSBCH DMRS, a formula of a reference signal sequence r(m) is:

$$r(m) = \frac{1}{\sqrt{2}}\big(1 - 2c(2m)\big) + j\frac{1}{\sqrt{2}}\big(1 - 2c(2m + 1)\big).$$

*c(n)* is a pseudo-random sequence, and is determined by using the following formula:

$$c(n) = \big(x_1(n + N_C) + x_2(n + N_C)\big)\bmod 2.$$

$$x_1(n + 31) = \big(x_1(n + 3) + x_1(n)\big)\bmod 2.$$

$$x_2(n + 31) = \big(x_2(n + 3) + x_2(n + 2) + x_2(n + 1) + x_2(n)\big)mod\ 2.$$

$N_C = 1600$, $x_1(n)$ and $x_2(n)$ are two m sequences, 31 initial values of $x_1(n)$ are $x_1(0) = 1$, $x_1(n) = 0$, and $n = 1, 2, ..., 30$, and 31 initial values of $x_2(n)$ are determined by $c_{\text{init}} = \sum_{i=0}^{30} x_2(i) \cdot 2^i$ .

To indicate an SL-SSB index, a manner of setting $c_{\text{init}}$ is:

$$c_{init} = f(i_{SL-SSB-Index}, N_{ID}^{SL}); \text{ where}$$

$$f(i_{SL-SSB-Index}, N_{ID}^{SL}) = 2^a(i_{SL-SSB-Index} + 1)(\lfloor N_{ID}^{SL}/4\rfloor + 1) +$$

$$2^b(i_{SL-SSB-Index} + 1) + c(N_{ID}^{SL}\ mod\ 4).$$

$(a, b, c) \in \{(11, 6, 1), (11, 6, 0), (9, 4, 0), (11, 4, 0)\}$, corresponding to four different expressions. For example, when $(a, b, c) = (11, 6, 0)$,

$$f(i_{SL-SSB-Index}, N_{ID}^{SL}) = 2^{11}(i_{SL-SSB-Index} + 1)(\lfloor N_{ID}^{SL}/4\rfloor + 1) +$$

$$2^6(i_{SL-SSB-Index} + 1).$$

$N_{ID}^{SL}$ is a physical layer SL synchronization ID, $i_{SL-SSB-Index}$ is SL-SSB index information carried in the DMRS, and a length may be 3 bits, 4 bits, 5 bits, or 6 bits. It should be understood that a length range of $N_{ID}^{SL}$ is less than or equal to 8 bits.

In a possible implementation, the SL-SSB index information may be jointly designed by using the SL-SSB index carried in the DMRS and a 2-bit resource of reservedBits.

Example 1: The SL-SSB index information needs 3 bits in total to indicate that only a 3-bit resource of $i_{SL-SSB-Index}$ is used.

Example 2: The SL-SSB index information needs to be indicated by 4 bits in total:

(1) Use only a 4-bit resource of $i_{SL\text{-}SSB\text{-}Index}$.
(2) Use a 3-bit resource of $i_{SL\text{-}SSB\text{-}Index}$ and a 1-bit resource of reservedBits.

Example 3: The SL-SSB index information needs to be indicated by 5 bits in total:

(1) Use only a 5-bit resource of $i_{SL\text{-}SSB\text{-}Index}$.
(2) Use a 4-bit resource of $i_{SL\text{-}SSB\text{-}Index}$ and a 1-bit resource of reservedBits.
(3) Use a 3-bit resource of $i_{SL\text{-}SSB\text{-}Index}$ and a 2-bit resource of reservedBits.

Example 4: The SL-SSB index information needs to be indicated by 6 bits in total:

(1) Use only a 6-bit resource of $i_{SL\text{-}SSB\text{-}Index}$.
(2) Use a 5-bit resource of $i_{SL\text{-}SSB\text{-}Index}$ and a 1-bit resource of reservedBits.
(3) Use a 4-bit resource of $i_{SL\text{-}SSB\text{-}Index}$ and a 2-bit resource of reservedBits.

The first terminal device obtains index information of second synchronization signals by using the PSBCH DMRS, the SL-SSID, and/or reservedBits. The first terminal device measures the received second synchronization signals to obtain RSRPs corresponding to the received second synchronization signals, compares the RSRPs, selects one second synchronization signal (for example, an SSB #1), and sends the second synchronization signal to the second terminal device, to complete an initial beam selection process.

Specifically, when determining the SSB #1 based on the RSRPs, the first terminal device may specifically determine the SSB #1 based on a highest RSRP in the RSRPs corresponding to the second synchronization signals, or determine the SSB #1 based on an RSRP that is greater than or equal to a first threshold in the RSRPs corresponding to the second synchronization signals. The first threshold may be pre-configured or preset. This is not limited in this application.

Based on the foregoing technical solution, the terminal device may implement initial synchronization/access of distributed beams based on the foregoing beam sweeping sequence. After generating, according to the foregoing procedure, the beam sweeping sequence based on the identification information and the total quantity of beams corresponding to each terminal device, the terminal device may perform beam sending and receiving based on the obtained beam sweeping sequence and the first pattern. Due to a feature of a design solution of the first pattern, a beam sweeping manner of the terminal device is not limited to a geographical location, a synchronization status of the terminal device, and a quantity of beams. In addition, it can be ensured that initial beam synchronization/access between any two terminal devices in the distributed SL system can be implemented in a specific time period. Any two terminal devices may establish, by exchanging beam information with each other, a communication link for a terminal device having a communication requirement.

It may be understood that, in the foregoing embodiment, a time for sweeping one beam direction is divided into n time units or $\Delta$ time units, where both n and $\Delta$ are positive integers greater than or equal to 9. This does not limit the protection scope of embodiments of this application. In a process of calculating the foregoing related parameters, calculation may be performed based on the foregoing formula, or calculation may be performed based on a variation of the foregoing formula, or calculation may be performed in another manner to meet a calculation result of the formula.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that, in the foregoing method embodiments, the method and the operations implemented by the terminal device may be implemented by a component (for example, a chip or a circuit) of the terminal device. In addition, the method and the operations implemented by the network device may be implemented by a component (for example, a chip or a circuit) of the network device. This is not limited.

Corresponding to the methods provided in the foregoing method embodiments, embodiments of this application further provide corresponding apparatuses. The apparatus includes a corresponding module configured to perform the foregoing method embodiments. The module may be software, hardware, or a combination of software and hardware. It may be understood that the technical features described in the method embodiments are also applicable to the following apparatus embodiments.

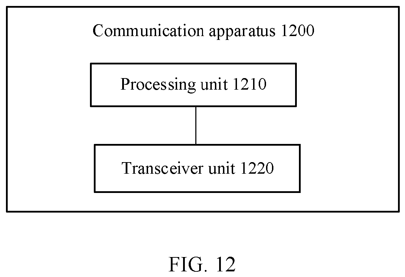

The foregoing describes in detail the communication methods provided in embodiments of this application with reference to FIG. 4 to FIG. 10, and the following describes in detail communication apparatuses provided in embodiments of this application with reference to FIG. 11 and FIG. 12.

The following describes in detail the communication apparatuses provided in embodiments of this application with reference to FIG. 11 and FIG. 12. It should be understood that descriptions of the apparatus embodiments correspond to the descriptions of the method embodiments. Therefore, for content that is not described in detail, refer to the foregoing method embodiments. For brevity, details of some content are not described herein again. In embodiments of this application, a sending device or a receiving device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 11 is a block diagram of an example of an information transmission device 1100 according to this application. Any device like the terminal device and the network device in any method in FIG. 4 to FIG. 10 may be implemented as the communication device shown in FIG. 11.

It should be understood that the communication device 1100 may be a physical device, a component (for example, an integrated circuit or a chip) of a physical device, or a functional module in a physical device.

As shown in FIG. 11, the communication device 1100 includes one or more processors 1110. Optionally, the processor 1110 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented as a transceiver. Optionally, the communication device 1100 may further include a transceiver 1130. The transceiver 1130 may also be referred to as a transceiver unit, a transceiver machine, a transceiver circuit, or the like, and is configured to implement a transceiver function.

Optionally, the communication device 1100 may further include a memory 1120. A specific deployment location of the memory 1120 is not specifically limited in this embodiment of this application. The memory may be integrated into the processor, or may be independent of the processor. When the device 1100 does not include the memory, the device 1100 only needs to have a processing function, and the memory may be deployed at another location (for example, a cloud system).

The processor 1110, the memory 1120, and the transceiver 1130 communicate with each other through an internal connection path, to transfer a control signal and/or a data signal.

It may be understood that, although not shown, the device 1100 may further include other apparatuses, for example, an input apparatus, an output apparatus, and a battery.

Optionally, in some embodiments, the memory 1120 may store execution instructions used to perform the methods in embodiments of this application. The processor 1110 may execute the instructions stored in the memory 1120 and complete, in combination with other hardware (for example, the transceiver 1130), the steps performed in the following methods. For a specific working process and beneficial effects, refer to the descriptions in the foregoing method embodiments.

The methods disclosed in embodiments of this application may be applied to the processor 1110, or may be implemented as the processor 1110. The processor 1110 may be an integrated circuit chip and has a signal processing capability. In an implementation process, steps of the foregoing methods can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware in a decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1120 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

FIG. 12 is a block diagram of a communication apparatus 1200 according to this application. The apparatus 1200 includes a transceiver unit 1220, and the transceiver unit 1220 may be configured to implement a corresponding communication function. The transceiver unit 1220 may also be referred to as a communication interface or a communication unit.

Optionally, the apparatus 1200 may further include a processing unit 1210, and the processing unit 1210 may be configured to perform data processing.

Optionally, a specific form of the apparatus 1200 configured to perform information transmission may be a general-purpose computer device or a chip in a general-purpose computer device. This is not limited in this embodiment of this application. As shown in FIG. 10, the apparatus includes the processing unit 1210 and the transceiver unit 1220.

Specifically, the apparatus 1200 may be any device in this application, and may implement functions that can be implemented by the device. It should be understood that the apparatus 1200 may be a physical device, a component (for example, an integrated circuit or a chip) of a physical device, or a functional module in a physical device.

In a possible design, the apparatus 1200 may be the terminal device (for example, the terminal device) in the foregoing method embodiments, or may be a chip configured to implement a function of the terminal device (for example, the terminal device) in the foregoing method embodiments.

Optionally, the apparatus 1200 further includes a storage unit. The storage unit may be configured to store instructions and/or data. The processing unit 1210 may read the instructions and/or the data in the storage unit, so that the apparatus is enabled to implement actions of different terminal devices in the foregoing method embodiments, for example, actions of the control network element or the terminal device.

The apparatus 1200 may be configured to perform the actions performed by the control network element or the terminal device in the foregoing method embodiments. In this case, the apparatus 1200 may be the control network element or the terminal device, or a component in the control network element or the terminal device. The transceiver unit 1220 is configured to perform receiving/sending-related operations of the control network element or the terminal device in the foregoing method embodiments. The processing unit 1210 is configured to perform processing-related operations of the control network element or the terminal device in the foregoing method embodiments.

It should be understood that the apparatus 1200 may be configured to perform the actions performed by the control network element or the network device in the foregoing method embodiments. In this case, the transceiver unit 1220 in the apparatus 1200 may be implemented as a communication interface (for example, a transceiver or an input/output interface), for example, may correspond to the communication interface 1120 shown in FIG. 11; and the processing unit 1210 in the apparatus 1200 may be implemented as at least one processor, for example, may correspond to the processor 1110 shown in FIG. 11.

Optionally, the apparatus 1200 may further include a storage unit. The storage unit may be configured to store instructions or data. The processing unit may invoke the instructions or the data stored in the storage unit, to implement a corresponding operation.

It should be understood that specific processes in which the units perform the foregoing corresponding steps are described in detail in the foregoing method embodiments. For brevity, details are not described herein again.

It should be understood that specific processes in which the units perform the foregoing corresponding steps are described in detail in the foregoing method embodiments. For brevity, details are not described herein again.

In addition, in this application, the communication apparatus 1200 is presented in a form of a functional module. Herein, "module" may be an application-specific integrated circuit ASIC, a circuit, a processor that executes one or more software or firmware programs, a memory, an integrated logic circuit, and/or another component capable of providing the foregoing functions. In a simple embodiment, a person skilled in the art may figure out that the apparatus 1200 may be in a form shown in FIG. 12. The processing unit 1210 may be implemented as the processor 1110 shown in FIG. 11. Optionally, if the computer device shown in FIG. 11 includes the memory 1100, the processing unit 1010 may be implemented as the processor 1110 and the memory 1100. The transceiver unit 1220 may be implemented as the transceiver 1130 shown in FIG. 11. The transceiver 1130 includes a receiving function and a sending function. Specifically, the processor is implemented by executing a computer program stored in the memory. Optionally, when the apparatus 1200 is a chip, a function and/or an implementation process of the transceiver unit 1220 may alternatively be implemented as a pin, a circuit, or the like. Optionally, the memory may be a storage unit in the chip, for example, a register or a cache. Alternatively, the storage unit may be a storage unit that is in the apparatus and that is located outside the chip, for example, the memory 1120 shown in FIG. 11, or may be a storage unit that is deployed in another system or device and is not in the computer device.

Various aspects or features of this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to various other media that can store, contain and/or carry instructions and/or data.

According to the methods provided in embodiments of this application, this application further provides a computer program product. The computer program product includes a computer program or a group of instructions. When the computer program or the group of instructions are run on a computer, the computer is enabled to perform the method according to any one of the embodiments shown in FIG. 4 to FIG. 10.

According to the methods provided in embodiments of this application, this application further provides a computer-readable storage medium. The computer-readable medium stores a program or a group of instructions. When the program or the group of instructions are run on a computer, the computer is enabled to perform the method according to any one of the embodiments shown in FIG. 4 to FIG. 10.

According to the methods provided in embodiments of this application, this application further provides a communication system, including the foregoing apparatus or device.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the internet interacting with other systems by using the signal).

It should be further understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

The protocol in this application may be a communication protocol or a specification, for example, a 3GPP communication protocol.

A person of ordinary skill in the art may be aware that, in combination with the examples described in embodiments disclosed in this specification, units and algorithm steps may be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    determining, by a first terminal device, a beam sweeping sequence based on identification information and a total quantity of beams, wherein the identification information is identification information of the first terminal device, and the total quantity of beams is a total quantity of beams corresponding to the first terminal device;
    determining, by the first terminal device, a first pattern based on the beam sweeping sequence; and
    sending, by the first terminal device, a first synchronization signal on the beam sweeping sequence based on the first pattern.

2. The method according to claim 1, wherein the determining, by a first terminal device, a beam sweeping sequence based on identification information of the first terminal device and a total quantity of beams corresponding to the first terminal device comprises:

    determining, by the first terminal device, a first sequence based on the identification information; and
    determining, by the first terminal device, the beam sweeping sequence based on the first sequence and the total quantity of beams.

3. The method according to claim 1 or 2, wherein the determining, by the first terminal device, the first pattern based on the beam sweeping sequence comprises:

    determining, by the first terminal device, the first pattern based on a first sweeping time and a first preset condition, wherein
    the first sweeping time is a sweeping time of a beam in the beam sweeping sequence, the first sweeping time comprises n time units, and n is a positive integer greater than or equal to 9.

4. The method according to claim 3, wherein the sending, by the first terminal device, a first synchronization signal on the beam sweeping sequence based on the first pattern comprises:

    sending, by the first terminal device, the first synchronization signal in an $i^{th}$ time unit and an $(n-i)^{th}$ time unit based on the first pattern; and/or
    receiving, by the first terminal device, the first synchronization signal in a time unit other than the $i^{th}$ time unit and the $(n-i)^{th}$ time unit in the n time units based on the first pattern, wherein
    i is an integer less than or equal to n, and both i and n-i are integers greater than or equal to 0.

**5.** The method according to claim 3 or 4, wherein the first preset condition is:

$$(1) \ i_p > i_q;$$

$$(2) \ i_p \leq 2i_q;$$

$$(3) \ \frac{n}{2} \geq i_p + i_q;$$

$$(4) \ i_p \leq \frac{n}{3}; \ i_q < \frac{n}{4};$$

and

$$(5) \ \text{if} \ n \leq 2i_p + i_q \ \text{and} \ n \geq i_p + i_q, \ n \leq i_p + 2i_q,$$

wherein
p and q are determined based on the total quantity of beams, $i_p$ represents a time unit for sending the first synchronization signal by using a second pattern, $i_q$ represents a time unit for sending the first synchronization signal by using a third pattern, the second pattern and the third pattern are related to the beam sweeping sequence, and the first pattern comprises the second pattern and the third pattern.

**6.** The method according to claim 5, wherein the method further comprises:

receiving, by the first terminal device, a second synchronization signal from a second terminal device; and
determining, by the first terminal device, identification information of the second terminal device based on a synchronization signal identifier of the second synchronization signal.

**7.** The method according to claim 6, wherein the method further comprises:
determining, by the first terminal device, a second beam based on index information of the second synchronization signal, wherein the second beam is a beam used by the second terminal device to send the second synchronization signal.

**8.** The method according to claim 7, wherein an indication resource of the index information comprises a 3-bit resource carried by a demodulation reference signal DMRS of the second synchronization signal and a 1-bit resource in reserved bits reservedBits of a payload of the second synchronization signal.

**9.** A communication method, comprising:

determining, by a second terminal device, a beam sweeping sequence based on identification information and a total quantity of beams, wherein the identification information is identification information of the second terminal device, and the total quantity of beams is a total quantity of beams corresponding to the second terminal device;
determining, by the second terminal device, a first pattern based on the beam sweeping sequence; and
sending, by the second terminal device, a first synchronization signal on the beam sweeping sequence based on the first pattern.

**10.** The method according to claim 9, wherein the determining, by a second terminal device, a beam sweeping sequence based on identification information of the second terminal device and a total quantity of beams corresponding to the second terminal device comprises:

determining, by the second terminal device, a first sequence based on the identification information; and
determining, by the second terminal device, the beam sweeping sequence based on the first sequence and the total quantity of beams.

**11.** The method according to claim 9 or 10, wherein the determining, by the second terminal device, the first pattern based on the beam sweeping sequence comprises:

> determining, by the second terminal device, the first pattern based on a first sweeping time and a first preset condition, wherein
> the first sweeping time is a sweeping time of a beam in the beam sweeping sequence, the first sweeping time comprises n time units, and n is a positive integer greater than or equal to 9.

**12.** The method according to claim 11, wherein the first pattern further indicates the second terminal device to send the first synchronization signal in an $i^{th}$ time unit and an $(n-i)^{th}$ time unit; and/or

> the first pattern further indicates the second terminal device to receive the first synchronization signal in a time unit other than the $i^{th}$ time unit and the $(n-i)^{th}$ time unit in the n time units, wherein
> i is an integer less than or equal to n, and both i and n-i are integers greater than or equal to 0.

**13.** The method according to claim 11 or 12, wherein the first preset condition is:

$$(1)\ i_p > i_q;$$

$$(2)\ i_p \leq 2i_q;$$

$$(3)\ \frac{n}{2} \geq i_p + i_q;$$

$$(4)\ i_p \leq \frac{n}{3}; i_q < \frac{n}{4};$$

and

$$(5)\ \text{if}\ n \leq 2i_p + i_q\ \text{and}\ n \geq i_p + i_q,\ n \leq i_p + 2i_q,$$

> wherein
> p and q are determined based on the total quantity of beams, $i_p$ represents a time unit for sending the first synchronization signal by using a second pattern, $i_q$ represents a time unit for sending the first synchronization signal by using a third pattern, the second pattern and the third pattern are related to the beam sweeping sequence, and the first pattern comprises the second pattern and the third pattern.

**14.** The method according to claim 13, wherein the method further comprises:
sending, by the second terminal device, a second synchronization signal to a first terminal device, wherein the second synchronization signal is used to determine the identification information of the second terminal device.

**15.** The method according to claim 14, wherein index information of the second synchronization signal is used to determine a second beam, and the second beam is a beam used by the second terminal device to send the second synchronization signal.

**16.** The method according to claim 15, wherein an indication resource of the index information comprises a 3-bit resource carried by a demodulation reference signal DMRS of the second synchronization signal and a 1-bit resource in reserved bits reservedBits of a payload of the second synchronization signal.

**17.** A communication apparatus, wherein the apparatus comprises a unit configured to perform the method according to any one of claims 1 to 8, or a unit configured to perform the method according to any one of claims 9 to 16.

**18.** A communication apparatus, comprising:

> a processor and a memory, wherein
> the processor is configured to execute a computer program stored in the memory, so that the communication apparatus is enabled to perform the method according to any one of claims 1 to 8 or the method according to any one of claims 9 to 16.

19. A computer-readable storage medium, wherein a computer program is stored on the computer-readable storage medium, and when the computer program is run on a computer, the computer is enabled to perform the method according to any one of claims 1 to 8 or the method according to any one of claims 9 to 16.

20. A chip system, comprising a processor, wherein the processor is configured to invoke a computer program from a memory and run the computer program, so that an information processing configuration device with the chip system installed is enabled to perform the method according to any one of claims 1 to 8 or the method according to any one of claims 9 to 16.

21. A communication apparatus, comprising a processing unit and a transceiver unit, wherein

the processing unit is configured to determine a beam sweeping sequence based on identification information and a total quantity of beams, wherein the identification information is identification information of the first terminal device, and the total quantity of beams is a total quantity of beams corresponding to the first terminal device; the processing unit is further configured to determine a first pattern based on the beam sweeping sequence; and the transceiver unit is configured to send a first synchronization signal on the beam sweeping sequence based on the first pattern.

22. The apparatus according to claim 21, wherein

the processing unit is further configured to determine a first sequence based on the identification information; and the processing unit is further configured to determine the beam sweeping sequence based on the first sequence and the total quantity of beams.

23. The apparatus according to claim 21 or 22, wherein the processing unit is further configured to determine the first pattern based on a first sweeping time and a first preset condition, wherein the first sweeping time is a sweeping time of a beam in the beam sweeping sequence, the first sweeping time comprises n time units, and n is a positive integer greater than or equal to 9.

24. The apparatus according to claim 23, wherein the transceiver unit is further configured to send the first synchronization signal in an $i^{th}$ time unit and an $(n-i)^{th}$ time unit based on the first pattern; and/or

the transceiver unit is further configured to receive the first synchronization signal in a time unit other than the $i^{th}$ time unit and the $(n-i)^{th}$ time unit in the n time units based on the first pattern, wherein i is an integer less than or equal to n, and both i and n-i are integers greater than or equal to 0.

25. The apparatus according to claim 23 or 24, wherein the first preset condition is:

$$(1)\ i_p > i_q;$$

$$(2)\ i_p \leq 2i_q;$$

$$(3)\ \frac{n}{2} \geq i_p + i_q;$$

$$(4)\ i_p \leq \frac{n}{3}; i_q < \frac{n}{4};$$

and

$$(5)\ \text{if}\ n \leq 2i_p + i_q\ \text{and}\ n \geq i_p + i_q,\ n \leq i_p + 2i_q,$$

wherein

p and q are determined based on the total quantity of beams, $i_p$ represents a time unit for sending the first synchronization signal by using a second pattern, $i_q$ represents a time unit for sending the first synchronization signal by using a third pattern, the second pattern and the third pattern are related to the beam sweeping sequence, and the first pattern comprises the second pattern and the third pattern.

26. The apparatus according to claim 25, wherein

the transceiver unit is further configured to receive a second synchronization signal from a second terminal device; and
the processing unit is further configured to determine identification information of the second terminal device based on a synchronization signal identifier of the second synchronization signal.

27. The apparatus according to claim 26, wherein
the processing unit is further configured to determine a second beam based on index information of the second synchronization signal, wherein the second beam is a beam used by the second terminal device to send the second synchronization signal.

28. The apparatus according to claim 27, wherein an indication resource of the index information comprises a 3-bit resource carried by a demodulation reference signal DMRS of the second synchronization signal and a 1-bit resource in reserved bits reservedBits of a payload of the second synchronization signal.

29. A communication apparatus, comprising a processing unit and a transceiver unit, wherein

the processing unit is configured to determine a beam sweeping sequence based on identification information and a total quantity of beams, wherein the identification information is identification information of the second terminal device, and the total quantity of beams is a total quantity of beams corresponding to the second terminal device;
the processing unit is further configured to determine a first pattern based on the beam sweeping sequence; and
the transceiver unit is configured to send a first synchronization signal on the beam sweeping sequence based on the first pattern.

30. The apparatus according to claim 29, wherein

the processing unit is further configured to determine a first sequence based on the identification information; and
the processing unit is further configured to determine the beam sweeping sequence based on the first sequence and the total quantity of beams.

31. The apparatus according to claim 29 or 30, wherein

the processing unit is further configured to determine the first pattern based on a first sweeping time and a first preset condition, wherein
the first sweeping time is a sweeping time of a beam in the beam sweeping sequence, the first sweeping time comprises n time units, and n is a positive integer greater than or equal to 9.

32. The apparatus according to claim 31, wherein the first pattern further indicates the transceiver unit to send the first synchronization signal in an $i^{th}$ time unit and an $(n-i)^{th}$ time unit; and/or

the first pattern further indicates the transceiver unit to receive the first synchronization signal in a time unit other than the $i^{th}$ time unit and the $(n-i)^{th}$ time unit in the n time units, wherein
i is an integer less than or equal to n, and both i and n-i are integers greater than or equal to 0.

33. The apparatus according to claim 31 or 32, wherein the first preset condition is:

$$(1)\ i_p > i_q;$$

$$(2) \ i_p \leq 2i_q;$$

$$(3) \ \frac{n}{2} \geq i_p + i_q;$$

$$(4) \ i_p \leq \frac{n}{3}; i_q < \frac{n}{4};$$

and

$$(5) \ \text{if} \ n \leq 2i_p + i_q \ \text{and} \ n \geq i_p + i_q, \ n \leq i_p + 2i_q,$$

wherein

p and q are determined based on the total quantity of beams, $i_p$ represents a time unit for sending the first synchronization signal by using a second pattern, $i_q$ represents a time unit for sending the first synchronization signal by using a third pattern, the second pattern and the third pattern are related to the beam sweeping sequence, and the first pattern comprises the second pattern and the third pattern.

34. The apparatus according to claim 33, wherein
the transceiver unit is further configured to send a second synchronization signal to a first terminal device, wherein the second synchronization signal is used to determine the identification information of the second terminal device.

35. The apparatus according to claim 34, wherein index information of the second synchronization signal is used to determine a second beam, and the second beam is a beam used by the second terminal device to send the second synchronization signal.

36. The apparatus according to claim 35, wherein an indication resource of the index information comprises a 3-bit resource carried by a demodulation reference signal DMRS of the second synchronization signal and a 1-bit resource in reserved bits reservedBits of a payload of the second synchronization signal.

FIG. 1

(a)

(b)

(c)

(d)

FIG. 2

Physical slot

Slot 1 Slot 2 Slot 3 Slot 4 Slot 5 Slot 6 Slot 7 Slot 8 Time

Logical slot

| Slot 1' | Slot 2' | Slot 3' | Slot 4' | ... |
|---------|---------|---------|---------|-----|

FIG. 3

Method 400

A first terminal device determines a beam sweeping sequence based on identification information of the first terminal device and a total quantity of beams corresponding to the first terminal device

S410

The first terminal device determines a first pattern based on the beam sweeping sequence

S420

FIG. 4

FIG. 5

FIG. 6

FIG. 7

FIG. 8

FIG. 9

$\Delta = 9$

$\Delta = 10$

$\Delta = 11$

$\Delta = 12$

FIG. 10

Communication apparatus 1100

Processor 1110

Memory 1120

Transceiver 1130

FIG. 11

Communication apparatus 1200

Processing unit 1210

Transceiver unit 1220

FIG. 12

**INTERNATIONAL SEARCH REPORT**

| International application No. |
| --- |
| **PCT/CN2023/123704** |

| A. | CLASSIFICATION OF SUBJECT MATTER |
| --- | --- |

H04W 72/044(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 波束, 扫描, 对齐, 序列, 顺序, 图样, 图案, 分布式, 侧链路, 侧行链路, 同步, 方向, 总数, 数量, 标识, 循环正交二进制, 身份, 终端, 个数, beam, sweeping, sequence, schem+, distribut+, sidelink, SL, FR2, +V2X, frequency, ranges, 2, direction, ID, identification, WTRU, UE, terminal

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 110971281 A (CHINA ACADEMY OF TELECOMMUNICATION TECHNOLOGY) 07 April 2020 (2020-04-07) <br> description, paragraphs 7-25 | 1-36 |
| A | CN 107734602 A (HUAWEI TECHNOLOGIES CO., LTD.) 23 February 2018 (2018-02-23) <br> entire document | 1-36 |
| A | US 2022311477 A1 (APPLE INC.) 29 September 2022 (2022-09-29) <br> entire document | 1-36 |
| A | US 2018241452 A1 (QUALCOMM INC.) 23 August 2018 (2018-08-23) <br> entire document | 1-36 |
| A | CATT. "Offline summary on AI 7.2.4.1.3 Synchronization mechanism" <br> *3GPP TSG RAN1 Meeting #95 R1-1814147*, 16 November 2018 (2018-11-16), <br> entire document | 1-36 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **17 November 2023** | **22 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/123704**

| Patent document cited in search report | | | Publication date (day/month/year) | Patent family member(s) | | | Publication date (day/month/year) |
|---|---|---|---|---|---|---|---|
| CN | 110971281 | A | 07 April 2020 | WO | 2020063471 | A1 | 02 April 2020 |
| CN | 107734602 | A | 23 February 2018 | BR | 112019001582 | A2 | 07 May 2019 |
| | | | | US | 2019159152 | A1 | 23 May 2019 |
| | | | | EP | 3478000 | A1 | 01 May 2019 |
| | | | | WO | 2018028339 | A1 | 15 February 2018 |
| | | | | IN | 201917002856 | A | 17 May 2019 |
| | | | | VN | 63532 | A | 27 May 2019 |
| US | 2022311477 | A1 | 29 September 2022 | EP | 4169171 | A1 | 26 April 2023 |
| | | | | JP | 2023537716 | A | 05 September 2023 |
| | | | | WO | 2022028003 | A1 | 10 February 2022 |
| | | | | KR | 20230034354 | A | 09 March 2023 |
| | | | | CN | 116158014 | A | 23 May 2023 |
| US | 2018241452 | A1 | 23 August 2018 | WO | 2018156601 | A1 | 30 August 2018 |
| | | | | EP | 3586453 | A1 | 01 January 2020 |
| | | | | CN | 110337787 | A | 15 October 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211406912X